# EUROPEAN PATENT APPLICATION

(11) **EP 4 773 678 A1**
(43) Date of publication of application: **08.07.2026**
(21) Application number: 23950098.6
(22) Date of filing: 29.08.2023
(51) Int. Cl.: H04W 52/02, H04W 72/12

(54) **COMMUNICATION METHOD, AP MLD, AND STORAGE MEDIUM**

(71) Applicant: Beijing Xiaomi Mobile Software Co., Ltd., Beijing 100085 (CN)
(72) Inventor: CHENG, Yajun, Beijing 100085 (CN)
(74) Representative: Dehns Germany Partnerschaft mbB
(86) International application number: PCT/CN2023/115617
(87) International publication number: WO 2025/043506

(57) **Abstract**

Embodiments of the present disclosure relate to the technical field of communications, and provide a communication method, an access point multi-link device (AP MLD), and a storage medium. The method comprises: a first AP MLD determines a first radio frame, wherein the first radio frame is used for indicating scheduling information of each first restricted target wake time (R-TWT) added by a first station device STA, the first STA is affiliated to a first non-access point multi-link device (Non-AP MLD) and operates on a communication link corresponding to a first frequency band, the first Non-AP MLD is associated with the first AP MLD, and the first STA is located in an overlapping basic service set (OBSS) formed by the first AP MLD and a second AP MLD in the first frequency band; and sending the first radio frame to the second AP MLD. In the embodiments of the present disclosure, when a basic service set is formed between AP MLDs, an indication mode for scheduling information of an R-TWT added by an STA located in the basic service set can be provided.

## Description

### TECHNICAL FIELD

The present disclosure relates to the field of communication technology, and in particular to a communication method, an AP MLD, and a storage medium.

### BACKGROUND

The target wake time (TWT) is used by the station (STA) and the access point (AP) to negotiate and communicate within a specific service period and remain dormant at other times to save device energy consumption. In order to ensure the communication of low-latency services, the restricted target wake time (R-TWT) protocol is proposed. Low-latency service communication is carried out within the service period (SP) of R-TWT, and other communication services are suspended or postponed during this period.

Currently, the R-TWT mechanism will be further studied to ensure that low-latency service communications are not interfered with.

### SUMMARY

These embodiments of the present disclosure provide a communication method, an AP MLD, and a storage medium.

In a first aspect, embodiments of the present disclosure provide a communication method, where the method includes:
determining, by a first access point device multi-link AP MLD, a first frame, where the first frame indicates scheduling information of each first restricted target wake time R-TWT joined by a first station device STA;
where, the first STA is affiliated with a first non-access point multi-link device Non-AP MLD and operates on a communication link corresponding to a first frequency band; the first Non-AP MLD is associated with the first AP MLD; the first STA is located in an overlapping basic service set OBSS formed, in the first frequency band, by the first AP MLD and a second AP MLD; and
sending the first frame to the second AP MLD.

In a second aspect, embodiments of the present disclosure provide a communication method, where the method includes:
receiving, by a second AP MLD, a first frame sent by a first AP MLD, the first frame indicating scheduling information of each first R-TWT joined by a first STA;
where, the first STA is affiliated with a first Non-AP MLD and operates on a communication link corresponding to a first frequency band; the first Non-AP MLD is associated with the first AP MLD; the first STA is located in an OBSS formed, in the first frequency band, by the first AP MLD and a second AP MLD.

In a third aspect, embodiments of the present disclosure provide an AP MLD, where the AP MLD includes:
a processing module, configured to determine a first frame, the first frame indicating scheduling information of each first restricted target wake time R-TWT joined by a first station device STA;
where, the first STA is affiliated with a first non-AP MLD supporting multi-link and operates on a communication link corresponding to a first frequency band; the first Non-AP MLD is associated with the first AP MLD; the first STA is located in an overlapping basic service set OBSS formed, in the first frequency band, by the first AP MLD and the second AP MLD;
a transceiver module, configured to send the first frame to the second AP MLD.

In a fourth aspect, embodiments of the present disclosure provide an AP MLD, where the AP MLD includes:
a transceiver module, configured to receive a first frame sent by a first AP MLD, the first frame indicating the scheduling information of each first R-TWT joined by a first STA;
where, the first STA is affiliated with a first Non-AP MLD and operates on a communication link corresponding to a first frequency band; the first Non-AP MLD is associated with the first AP MLD; the first STA is located in an OBSS formed by the first AP MLD and a second AP MLD on the first frequency band.

In a fifth aspect, embodiments of the present disclosure provide an AP MLD, where the AP MLD includes: one or more processors;
where the AP MLD is configured to perform the communication method described in the first aspect and/or the second aspect of these embodiments of the present disclosure.

In a sixth aspect, embodiments of the present disclosure provide a storage medium, the storage medium storing instructions, where when the instructions running on a communication device, the communication device is enabled to perform the communication method provided in the first aspect and/or described in the second aspect of these embodiments of the present disclosure.

In a seventh aspect, embodiments of the present disclosure provide a communication system, the communication system includes a first AP MLD and a second AP MLD; where the first AP MLD is configured to perform the method described in the first aspect, and the second AP MLD is configured to perform the method described in the second aspect.

Based on the communication method, AP MLD and storage medium provided in these embodiments of the present disclosure, a method for indicating the scheduling information of R-TWT can be provided.

Additional aspects and advantages of these embodiments of the present disclosure will be partially given in following description, which will become apparent from following description, or will be learned through the practice of the present disclosure.

### BRIEF DESCRIPTION OF THE DRAWINGS

In order to more clearly illustrate the technical solutions of these embodiments of the present disclosure, the drawings required for use in the description of these embodiments of the present disclosure will be briefly introduced below. The drawings in following description are only some embodiments of the present disclosure. For ordinary technicians in this field, other drawings can be obtained based on these drawings without creative work.
FIG. 1 is an architecture schematic diagram of a communication system according to embodiments of the present disclosure.
FIG. 2 is a schematic diagram of a communication scenario according to embodiments of the present disclosure.
FIG. 3 is a schematic diagram of R-TWT scheduling according to embodiments of the present disclosure.
FIG. 4 is a schematic diagram of an interaction of a communication method according to embodiments of the present disclosure.
FIG. 5 is a flow chart of a communication method according to embodiments of the present disclosure.
FIG. 6 is a second flow chart of a communication method according to embodiments of the present disclosure.
FIG. 7 is a third flow chart of a communication method according to embodiments of the present disclosure.
FIG. 8 is a fourth flow chart of a communication method according to embodiments of the present disclosure.
FIG. 9a is a structure schematic diagram of an AP MLD according to embodiments of the present disclosure.
FIG. 9b is another structure schematic diagram of an AP MLD according to embodiments of the present disclosure.
FIG. 10 is a structure schematic diagram of a communication device according to embodiments of the present disclosure.
FIG. 11 is a structure schematic diagram of a chip proposed according to embodiments of the present disclosure.

### DETAILED DESCRIPTION

These embodiments of the present disclosure provide a communication method, an AP MLD, and a storage medium.

In a first aspect, embodiments of the present disclosure provide a communication method, where the method includes:
determining, by a first access point multi-link device AP MLD, a first frame, where the first frame indicates scheduling information of each first restricted target wake time R-TWT joined by a first station device STA;
where, the first STA is affiliated with a first non-access point multi-link device Non-AP MLD and operates on a communication link corresponding to a first frequency band; the first Non-AP MLD is associated with the first AP MLD; the first STA is located in an overlapping basic service set OBSS formed, in the first frequency band, by the first AP MLD and a second AP MLD; and
sending the first frame to the second AP MLD.

In the foregoing embodiments, when the first AP MLD and the second AP MLD form an OBSS in the first frequency band, and the first STA (operating on the communication link corresponding to the first frequency band) affiliated with the first Non-AP MLD associated with the first AP MLD is located in the OBSS, the first AP MLD can indicate the scheduling information of each R-TWT joined by the first STA through the first frame, thereby realizing the scheduling information interaction of R-TWT between the first AP MLD and the second AP MLD.

In combination with some embodiments of the first aspect, in some embodiments, the first frame includes at least one first information field, and each of the first information fields indicates scheduling information of one first R-TWT joined by the first STA.

In the foregoing embodiments, the first frame can indicate the scheduling information of one first R-TWT joined by the first STA through each first information field, which is conducive to the second AP MLD to quickly determine the number of first R-TWTs joined by the first STA and the scheduling information of each first R-TWT.

In combination with some embodiments of the first aspect, in some embodiments, each of the first information fields includes at least one of following:
a first information sub-field, where the first information sub-field indicates a broadcast target wake time identifier of a corresponding first R-TWT;
a second information sub-field, where the second information sub-field indicates a target wake time of the corresponding first R-TWT;
a third information sub-field, where the third information sub-field indicates a duration of the corresponding first R-TWT;
a fourth information sub-field, where the fourth information sub-field including multiple first identification bits, each of the first identification bits indicating, by a first value, that an affiliated STA of the first Non-AP MLD is a scheduling member of the corresponding first R-TWT, and indicating, by a second value, that an affiliated STA of the first Non-AP MLD is not a scheduling member of the corresponding first R-TWT.

In the foregoing embodiments, each first information field can indicate different scheduling information of the corresponding first R-TWT through different information sub-fields, and can also indicate the scheduling status of the first R-TWT and the affiliated STA of the first Non-AP MLD associated with the first AP MLD through multiple identification bits, which is conducive to the distinguishing indication and determination of the scheduling information.

In combination with some embodiments of the first aspect, in some embodiments, the foregoing method further includes:
receiving a second frame sent by the second AP MLD, where the second frame indicates scheduling information of a second R-TWT established on the communication link that the first AP operates on;
where the first AP is affiliated with the second AP MLD and operates on the communication link corresponding to the first frequency band; the second frame is sent by the second AP MLD when a service period of the second R-TWT overlaps with a service period of the at least one first R-TWT.

In the foregoing embodiments, when the first AP MLD and the second AP MLD form an OBSS in the first frequency band, and the first STA (operating on the communication link corresponding to the first frequency band) affiliated with the first Non-AP MLD associated with the first AP MLD is located in the OBSS, the second AP MLD can indicate the scheduling information of the second R-TWT joined by the first AP (an affiliated AP affiliated with the second AP MLD and operating on the communication link corresponding to the first frequency band) through the second frame, thereby further realizing the scheduling information interaction of the R-TWT between the first AP MLD and the second AP MLD.

In combination with some embodiments of the first aspect, in some embodiments, the second frame includes at least one of following:
a fifth information sub-field, where the fifth information sub-field indicates a broadcast target wake time identifier of the second R-TWT;
a sixth information sub-field, where the sixth information sub-field indicates a target wake time of the second R-TWT;
a seventh information sub-field, where the seventh information sub-field indicates a duration of the second R-TWT;
an eighth information sub-field, where the eighth information sub-field includes multiple second identification bits, each of the second identification bits indicates, by a first value, that an affiliated STA of the second Non-AP MLD is a scheduling member of the second R-TWT, and indicates, by a second value, that an affiliated STA of the second Non-AP MLD is not a scheduling member of the second R-TWT; the second Non-AP MLD is associated with the second AP MLD.

In the foregoing embodiments, the second frame can indicate different scheduling information of the second R-TWT through different information sub-fields, and can also indicate the scheduling status of the second R-TWT and the affiliated STA of the second Non-AP MLD associated with the second AP MLD through multiple identification bits, which is conducive to the distinguishing indication and determination of the scheduling information.

In combination with some embodiments of the first aspect, in some embodiments, the first frame and the second frame are R-TWT coordination notification frames, R-TWT coordination indication frames or R-TWT coordination declaration frames.

In the foregoing embodiments, the first AP MLD and the second AP MLD can use the existing frame to implement the indication of R-TWT scheduling information, which is beneficial to saving signaling resources.

In combination with some embodiments of the first aspect, in some embodiments, the foregoing method further includes:
sending a third frame to the second AP MLD;
where the third frame is used for requesting coordination of a third R-TWT, and the third R-TWT is a first R-TWT, among multiple R-TWTs, with a service period overlapping with the service period of the second R-TWT.

In the foregoing embodiments, the first AP MLD may coordinate the third R-TWT with the service period overlapping with the second R-TWT through the third frame request to ensure the effective transmission of the low-latency service.

In combination with some embodiments of the first aspect, in some embodiments, the third frame is an R-TWT coordination request frame, and the third frame also includes a broadcast target wake time identifier of the third R-TWT.

In the foregoing embodiments, the first AP MLD can utilize the existing frame request to perform R-TWT coordination, which is beneficial to saving signaling resources.

In combination with some embodiments of the first aspect, in some embodiments, if all affiliated STAs of the first Non-AP MLD are scheduling members of the third R-TWT, or the second R-TWT has been established on all communication links that affiliated APs of the second AP MLD operate on, the third frame is used for requesting the coordination of the third R-TWT by using coordinated orthogonal frequency division multiple access or coordinated spatial multiplexing.

If at least one affiliated STA of the first Non-AP MLD is not the scheduling member of the third R-TWT, and the second R-TWT has not been established on at least one communication link that the affiliated APs of the second AP MLD operate on, the third frame is used for requesting link migration of the third R-TWT.

In the foregoing embodiments, the first AP MLD may request different coordination modes to coordinate the third R-TWT according to the R-TWT scheduling status of the affiliated STA of the first AP MLD and the R-TWT establishment status of the second AP MLD, so as to improve the diversity of R-TWT coordination.

In combination with some embodiments of the first aspect, in some embodiments, the third frame includes an R-TWT coordination type information field, the R-TWT coordination type information field requests to coordinate the third R-TWT by using coordinated orthogonal frequency division multiple access by a third value, requests to coordinate the third R-TWT by using coordinated spatial multiplexing by a fourth value, and requests to perform the link migration for the third R-TWT by a fifth value.

In the foregoing embodiments, the third frame may indicate different R-TWT coordination modes through different identification values, which is helpful for the second AP MLD to quickly determine the R-TWT coordination mode requested by the first AP MLD.

In combination with some embodiments of the first aspect, in some embodiments, if the third frame is used for requesting the coordination of the third R-TWT by using coordinated orthogonal frequency division multiple access or coordinated spatial multiplexing, the third frame further includes a corresponding coordination parameter of a coordination mode.

If the third frame is used for requesting the link migration of the third R-TWT, the third frame further includes a first link identifier, the first link identifier indicates the first communication link that the third R-TWT is applied to after the link migration is performed for the third R-TWT.

In the foregoing embodiments, when the first AP MLD requests to coordinate the third R-TWT by using coordinated orthogonal frequency division multiple access or coordinated spatial multiplexing, corresponding coordination parameters can be provided to the second AP MLD; when requesting to perform link migration on the third R-TWT, the link identifier of the migrated communication link can be provided to the second AP MLD, which is beneficial to improving the R-TWT coordination efficiency.

In combination with some embodiments of the first aspect, in some embodiments, the foregoing method further includes:
receiving a fourth frame sent by the second AP MLD, where the fourth frame indicates acceptance or rejection of the coordination of the third R-TWT.

In the foregoing embodiments, the second AP MLD may indicate acceptance or rejection of the coordination of the third R-TWT through the fourth frame, which is conducive to improving the R-TWT coordination mechanism.

In combination with some embodiments of the first aspect, in some embodiments, when the fourth frame indicates the acceptance of the coordination of the third R-TWT by using the coordinated orthogonal frequency division multiple access or the coordinated spatial multiplexing, the third R-TWT is coordinated based on the corresponding coordination parameter of the coordination mode.

In the foregoing embodiments, when the second AP MLD accepts to coordinate the third R-TWT by using the coordinated orthogonal frequency division multiple access or the coordinated spatial multiplexing, the first AP MLD can perform R-TWT coordination according to the corresponding coordination parameter, which is beneficial to improving the R-TWT coordination efficiency.

In combination with some embodiments of the first aspect, in some embodiments, when the fourth frame indicates acceptance of the link migration of the third R-TWT, the third R-TWT is migrated to the first communication link.

In the foregoing embodiments, the first AP MLD migrates the third R-TWT to the first communication link when the second AP MLD accepts the link migration of the third R-TWT, which is beneficial to improving the R-TWT coordination efficiency.

In combination with some embodiments of the first aspect, in some embodiments, when the fourth frame indicates acceptance of link migration of the third R-TWT, the fourth frame further includes a second link identifier;
where the second link identifier indicates the second communication link that the second R-TWT is applied to after the link migration is performed, by the second AP MLD, for the second R-TWT, and the first communication link and the second communication link are different.

In the foregoing embodiments, when the second AP MLD accepts the link migration of the third R-TWT, the second AP MLD can also instruct the second AP MLD through the fourth frame to perform link migration on the second R-TWT overlapping with the third R-TWT, and then apply the link identifier of the communication link of the second R-TWT, which is beneficial for the first AP MLD to determine the scheduling status of the second R-TWT of the second AP MLD.

In a second aspect, embodiments of the present disclosure provide a communication method, the method including:
receiving, by a second AP MLD, a first frame sent by a first AP MLD, the first frame indicating scheduling information of each first R-TWT joined by a first STA;
where, the first STA is affiliated with a first Non-AP MLD and operates on a communication link corresponding to a first frequency band; the first Non-AP MLD is associated with the first AP MLD; the first STA is located in an OBSS formed, in the first frequency band, by the first AP MLD and a second AP MLD.

In the foregoing embodiments, when the first AP MLD and the second AP MLD form an OBSS in the first frequency band, and the first STA (operating on the communication link corresponding to the first frequency band) affiliated with the first Non-AP MLD associated with the first AP MLD is located in the OBSS, the first AP MLD can determine the scheduling information of each R-TWT joined by the first STA through the first frame, thereby realizing the scheduling information interaction of R-TWT between the first AP MLD and the second AP MLD.

In combination with some embodiments of the second aspect, in some embodiments, the first frame includes at least one first information field, and each of the first information fields indicates the scheduling information of one first R-TWT joined by the first STA.

In the foregoing embodiments, the first frame can indicate the scheduling information of one first R-TWT joined by the first STA through each first information field, which is conducive to the second AP MLD to quickly determine the number of first R-TWTs joined by the first STA and the scheduling information of each first R-TWT.

In combination with some embodiments of the second aspect, in some embodiments, each of the first information fields includes at least one of following:
a first information sub-field, where the first information sub-field indicates a broadcast target wake time identifier of a corresponding first R-TWT;
a second information sub-field, where the second information sub-field indicates a target wake time of the corresponding first R-TWT;
a third information sub-field, where the third information sub-field indicates a duration of the corresponding first R-TWT;
a fourth information sub-field, where the fourth information sub-field including multiple first identification bits, each of the first identification bits indicating, by a first value, that an affiliated STA of the first Non-AP MLD is a scheduling member of the corresponding first R-TWT, and indicating, by a second value, that an affiliated STA of the first Non-AP MLD is not a scheduling member of the corresponding first R-TWT.

In the foregoing embodiments, each first information field can indicate different scheduling information of the corresponding first R-TWT through different information sub-fields, and can also indicate the scheduling status of the first R-TWT and the affiliated STA of the first Non-AP MLD associated with the first AP MLD through multiple identification bits, which is conducive to the distinguishing indication and determination of the scheduling information.

In combination with some embodiments of the second aspect, in some embodiments, the method further includes at least one of following:
if the first AP does not support R-TWT scheduling, then during a service period of each first R-TWT, the second AP MLD does not communicate on a communication link that the first AP operates on;
where, the first AP is affiliated with the second AP MLD and operates on the communication link corresponding to the first frequency band;
if the communication link that the first AP operates on has not established a second R-TWT, then during a service period of each first R-TWT, the second AP MLD does not communicate on the communication link that the first AP operates on;
if the communication link that the first AP operates on has established the second R-TWT, and among the first R-TWTs, a fourth R-TWT with a service period not overlapping with the service period of the second R-TWT exists, then during the service period of the fourth R-TWT, the second AP MLD does not communicate on the communication link that the first AP operates on;
if the communication link that the first AP operates on has established the second R-TWT, and among the first R-TWTs, a third R-TWT with a service period overlapping with the service period of the second R-TWT exists, then a second frame is sent to the first AP MLD, the second frame indicating the scheduling information of the second R-TWT.

In the foregoing embodiments, after determining the first scheduling information of the R-TWT joined by the first STA, the second AP MLD can adopt different communication response modes according to the R-TWT scheduling status of the first AP operating on the same link as the first STA, and the service period overlap status between the second R-TWT and the first R-TWT, which is conducive to realizing R-TWT adjustment and ensuring the transmission of low-latency services.

In combination with some embodiments of the second aspect, in some embodiments, the second frame includes at least one of following:
a fifth information sub-field, the fifth information sub-field indicating a broadcast target wake time identifier of the second R-TWT;
a sixth information sub-field, the sixth information sub-field indicating a target wake time of the second TWT;
a seventh information sub-field, the seventh information sub-field indicating a duration of the second R-TWT;
an eighth information sub-field, the eighth information sub-field including multiple second identification bits, each of the second identification bits indicating, by a first value, that an affiliated STA of the second Non-AP MLD is a scheduling member of the second R-TWT, and indicating, by a second value, that an affiliated STA of the second Non-AP MLD is not a scheduling member of the second R-TWT; the second Non-AP MLD is associated with the second AP MLD.

In the foregoing embodiments, the second frame can indicate different scheduling information of the second R-TWT through different information sub-fields, and can also indicate the scheduling status of the second R-TWT and the affiliated STA of the second Non-AP MLD associated with the second AP MLD through multiple identification bits, which is conducive to the distinguishing indication and determination of the scheduling information.

In combination with some embodiments of the second aspect, in some embodiments, the first frame and the second frame are R-TWT coordination notification frames, R-TWT coordination indication frames or R-TWT coordination declaration frames.

In the foregoing embodiments, the first AP MLD and the second AP MLD can use the existing frame to implement the indication of R-TWT scheduling information, which is beneficial to saving signaling resources.

In combination with some embodiments of the second aspect, in some embodiments, after sending the second frame, the method further includes:
receiving a third frame sent by the first AP MLD;
where the third frame is used for requesting coordination of a third R-TWT, and the third R-TWT is a first R-TWT, among multiple R-TWTs, with a service period overlapping with the service period of the second R-TWT.

In the foregoing embodiments, the first AP MLD may coordinate the third R-TWT with the service period overlapping with the second R-TWT through the third frame request to ensure the effective transmission of the low-latency service.

In combination with some embodiments of the second aspect, in some embodiments, the third frame is an R-TWT coordination request frame, and the third frame also includes a broadcast target wake time identifier of the third R-TWT.

In the foregoing embodiments, the first AP MLD can utilize the existing frame request to perform R-TWT coordination, which is beneficial to saving signaling resources.

In combination with some embodiments of the second aspect, in some embodiments, if all affiliated STAs of the first Non-AP MLD are scheduling members of the third R-TWT, or the second R-TWT has been established on all communication links that affiliated APs of the second AP MLD operate on, the third frame is used for requesting the coordination of the third R-TWT by using coordinated orthogonal frequency division multiple access or coordinated spatial multiplexing.

If at least one affiliated STA of the first Non-AP MLD is not the scheduling member of the third R-TWT, and the second R-TWT has not been established on at least one communication link that the affiliated APs of the second AP MLD operate on, the third frame is used for requesting link migration of the third R-TWT.

In the foregoing embodiments, the first AP MLD may request different coordination modes to coordinate the third R-TWT according to the R-TWT scheduling status of the affiliated STA of the first AP MLD and the R-TWT establishment status of the second AP MLD, so as to improve the diversity of R-TWT coordination.

In combination with some embodiments of the second aspect, in some embodiments, the third frame includes an R-TWT coordination type information field, the R-TWT coordination type information field requests to coordinate the third R-TWT by using coordinated orthogonal frequency division multiple access by a third value, requests to coordinate the third R-TWT by using coordinated spatial multiplexing by a fourth value, and requests to perform the link migration for the third R-TWT by a fifth value.

In the foregoing embodiments, the third frame may indicate different R-TWT coordination modes through different identification values, which is helpful for the second AP MLD to quickly determine the R-TWT coordination mode requested by the first AP MLD.

In combination with some embodiments of the second aspect, in some embodiments, if the third frame is used for requesting the coordination of the third R-TWT by using coordinated orthogonal frequency division multiple access or coordinated spatial multiplexing, the third frame further includes a corresponding coordination parameter of a coordination mode.

If the third frame is used for requesting the link migration of the third R-TWT, the third frame further includes a first link identifier, the first link identifier indicates the first communication link that the third R-TWT is applied to after the link migration is performed for the third R-TWT.

In the foregoing embodiments, when the first AP MLD requests to coordinate the third R-TWT by using coordinated orthogonal frequency division multiple access or coordinated spatial multiplexing, corresponding coordination parameters can be provided to the second AP MLD; when requesting to perform link migration on the third R-TWT, the link identifier of the migrated communication link can be provided to the second AP MLD, which is beneficial to improving the R-TWT coordination efficiency.

In combination with some embodiments of the second aspect, in some embodiments, the method further includes:
sending a fourth frame to the first AP MLD, where the fourth frame indicates acceptance or rejection of coordination of the third R-TWT.

In the foregoing embodiments, the second AP MLD may indicate acceptance or rejection of the coordination of the third R-TWT through the fourth frame, which is conducive to improving the R-TWT coordination mechanism.

In combination with some embodiments of the second aspect, in some embodiments, when the fourth frame indicates the acceptance of the coordination of the third R-TWT by using the coordinated orthogonal frequency division multiple access or the coordinated spatial multiplexing, the third R-TWT is coordinated based on the corresponding coordination parameter of the coordination mode.

In the foregoing embodiments, when the second AP MLD accepts to coordinate the third R-TWT by using the coordinated orthogonal frequency division multiple access or the coordinated spatial multiplexing, R-TWT coordination can be performed according to the corresponding coordination parameter, which is beneficial to improving the R-TWT coordination efficiency.

In combination with some embodiments of the second aspect, in some embodiments, when the fourth frame indicates acceptance of the link migration of the third R-TWT, the second R-TWT is migrated to the second communication link;
where, the second communication link is different from the first communication link, and the first communication link is a communication link that the third R-TWT applied to after the link migration is performed, by the first AP MLD, for the third R-TWT.

In the foregoing embodiments, the first AP MLD migrates the third R-TWT to the first communication link when the second AP MLD accepts the link migration of the third R-TWT, which is beneficial to improving the R-TWT coordination efficiency, and can ensure that the communication links corresponding to the second AP MLD and the third R-TWT with overlapping service period are different, effectively ensuring that low-latency service transmission is not interfered with.

In combination with some embodiments of the second aspect, in some embodiments, the fourth frame also includes a second link identifier of the second communication link.

In the foregoing embodiments, when the second AP MLD accepts the link migration of the third R-TWT, the second AP MLD can also instruct the second AP MLD through the fourth frame to perform link migration on the second R-TWT overlapping with the third R-TWT, and then apply the link identifier of the communication link of the second R-TWT, which is beneficial for the first AP MLD to determine the scheduling status of the second R-TWT of the second AP MLD.

In a third aspect, embodiments of the present disclosure provide an AP MLD, including:
a processing module, configured to determine a first frame, the first frame indicating scheduling information of each first restricted target wake time R-TWT joined by a first station device STA;
where, the first STA is affiliated with a first non-AP MLD supporting multi-link and operates on a communication link corresponding to a first frequency band; the first Non-AP MLD is associated with the first AP MLD; the first STA is located in an overlapping basic service set OBSS formed, in the first frequency band, by the first AP MLD and the second AP MLD;
a transceiver module, configured to send the first frame to the second AP MLD.

In a fourth aspect, embodiments of the present disclosure provide an AP MLD, including:
a transceiver module, configured to receive a first frame sent by a first AP MLD, the first frame indicating the scheduling information of each first R-TWT joined by a first STA;
where, the first STA is affiliated with a first Non-AP MLD and operates on a communication link corresponding to a first frequency band; the first Non-AP MLD is associated with the first AP MLD; the first STA is located in an OBSS formed by the first AP MLD and a second AP MLD on the first frequency band.

In a fifth aspect, embodiments of the present disclosure provide an AP MLD, including one or more processors;
where the AP MLD is configured to perform the communication method described in the first aspect and the optional implementation manner of the first aspect.

In a sixth aspect, embodiments of the present disclosure provide an AP MLD, including one or more processors;
where the AP MLD is configured to perform the communication method described in the second aspect and the optional implementation manner of the second aspect.

In the seventh aspect, embodiments of the present disclosure provide a storage medium, the storage medium storing instructions, when the instructions running on a communication device, the communication device is enabled to perform the method described in the first aspect, the second aspect, the optional implementation of the first aspect, and the optional implementation of the second aspect.

In an eighth aspect, embodiments of the present disclosure provide a program product, when the program product is executed by a communication device, the communication device is enabled to perform the method described in the first aspect, the second aspect, the optional implementation of the first aspect, and the optional implementation of the second aspect.

In a ninth aspect, embodiments of the present disclosure provide a computer program, which, when executed on a computer, enables the computer to perform the method described in the first aspect, the second aspect, the optional implementation of the first aspect, and the optional implementation of the second aspect.

In a tenth aspect, embodiments of the present disclosure provide a chip or a chip system. The chip or chip system includes a processing circuit configured to perform the method described in the first aspect, the second aspect, the optional implementation of the first aspect, and the optional implementation of the second aspect.

In the eleventh aspect, embodiments of the present disclosure provides a communication system, the communication system includes a first AP MLD and a second AP MLD; where the first AP MLD is configured to perform the method described in the first aspect and the optional implementation manner of the first aspect, and the second AP MLD is configured to perform the method described in the second aspect and the optional implementation manner of the second aspect.

It can be understood that the foregoing communication device, AP MLD, communication system, storage medium, program product, computer program, chip or chip system are all used for perform the method proposed in these embodiments of the present disclosure. Therefore, the beneficial effects that can be achieved can refer to the beneficial effects in the corresponding method, which will not be repeated here.

These embodiments of the present disclosure provide a communication method, an AP MLD, and a storage medium. In some embodiments, the terms communication method, information processing method, communication method, and the like can be replaced with each other, the terms communication device, information processing device, and the like can be replaced with each other, and the terms information processing system, communication system, and the like can be replaced with each other.

These embodiments of the present disclosure are not exhaustive, but are only illustrative of some embodiments, and are not intended to be a specific limitation on the scope of protection of the present disclosure. In the absence of contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, the optional implementation methods in a certain embodiment can be arbitrarily combined; in addition, these embodiments can be arbitrarily combined, for example, some or all of the steps of different embodiments can be arbitrarily combined, and a certain embodiment can be arbitrarily combined with the optional implementation methods of other embodiments.

In each embodiment of the present disclosure, unless otherwise specified or there is a logical conflict, the terms and/or descriptions between these embodiments are consistent and can be referenced to each other, and the technical features in different embodiments can be combined to form a new embodiment based on their internal logical relationships.

The terms used in these embodiments of the present disclosure are only for the purpose of describing specific embodiments and are not intended to limit the present disclosure.

In these embodiments of the present disclosure, unless otherwise specified, elements expressed in the singular form, such as "a", "an", "the", "above", "foregoing", "aforementioned", "this", and the like may mean "one and only one", or "one or more", "at least one", and the like. For example, when using articles such as "a", "an", "the" in English in translation, the noun after the article may be understood as a singular expression or a plural expression.

In these embodiments of the present disclosure, "plurality" refers to two or more.

In some embodiments, the terms "at least one," "one or more," "a plurality of," "multiple," and the like may be used interchangeably.

In some embodiments, "at least one of A and B", "A and/or B", "A in one case, B in another case", "in response to one case A, in response to another case B", and the like, may include following technical solutions according to the situation: in some embodiments, A (A is executed independently of B); in some embodiments, B (B is executed independently of A); in some embodiments, execution is selected from A and B (A and B are selectively executed); in some embodiments, A and B (both A and B are executed). When there are more branches such as A, B, C, and the like, it is also similar with the above.

In some embodiments, the recording method of "A or B" may include following technical solutions according to the situation: in some embodiments, A (A is executed independently of B); in some embodiments, B (B is executed independently of A); in some embodiments, execution is selected from A and B (A and B are selectively executed). When there are more branches such as A, B, C, and the like, it is also similar with the above.

The prefixes such as "first" and "second" in these embodiments of the present disclosure are only used for distinguish different description objects, and do not constitute restrictions on the position, order, priority, quantity or content of the description objects. The statement of the description object refers to the description in the context of the claims or embodiments, and should not constitute unnecessary restrictions due to the use of prefixes. For example, if the description object is a "field", the ordinal number before the "field" in the "first field" and the "second field" does not limit the position or order between the "fields", and the "first" and "second" do not limit whether the "fields" they modify are in the same message, nor do they limit the order of the "first field" and the "second field". For another example, if the description object is a "level", the ordinal number before the "level" in the "first level" and the "second level" does not limit the priority between the "levels". For another example, the number of description objects is not limited by the ordinal number, and can be one or more. Taking the "first device" as an example, the number of "devices" can be one or more. In addition, the objects modified by different prefixes may be the same or different. For example, if the description object is "device", then the "first device" and the "second device" may be the same device or different devices, and their types may be the same or different. For another example, if the description object is "information", then the "first information" and the "second information" may be the same information or different information, and their contents may be the same or different.

In some embodiments, "including A", "including A", "used to indicate A", and "carrying A" can be interpreted as directly carrying A or indirectly indicating A.

In some embodiments, terms such as "in response to ...", "in response to determining ...", "in the case of ...", "at the time of ...", "when ...", "if ...", and the like can be used interchangeably.

In some embodiments, terms such as "greater than", "greater than or equal to", "not less than", "more than", "more than or equal to", "not less than", "higher than", "higher than or equal to", "not lower than", and "above" can be replaced with each other, and terms such as "less than", "less than or equal to", "not greater than", "less than", "less than or equal to", "no more than", "lower than", "lower than or equal to", "not higher than", and "below" can be replaced with each other.

In some embodiments, the acquisition of data, information, and the like may comply with the laws and regulations of the country where the data is located.

In some embodiments, data, information, and the like may be obtained with the user's consent.

In addition, each element, each row, or each column in the table of these embodiments of the present disclosure may be implemented as an independent embodiment, and the combination of any elements, any rows, and any columns may also be implemented as an independent embodiment.

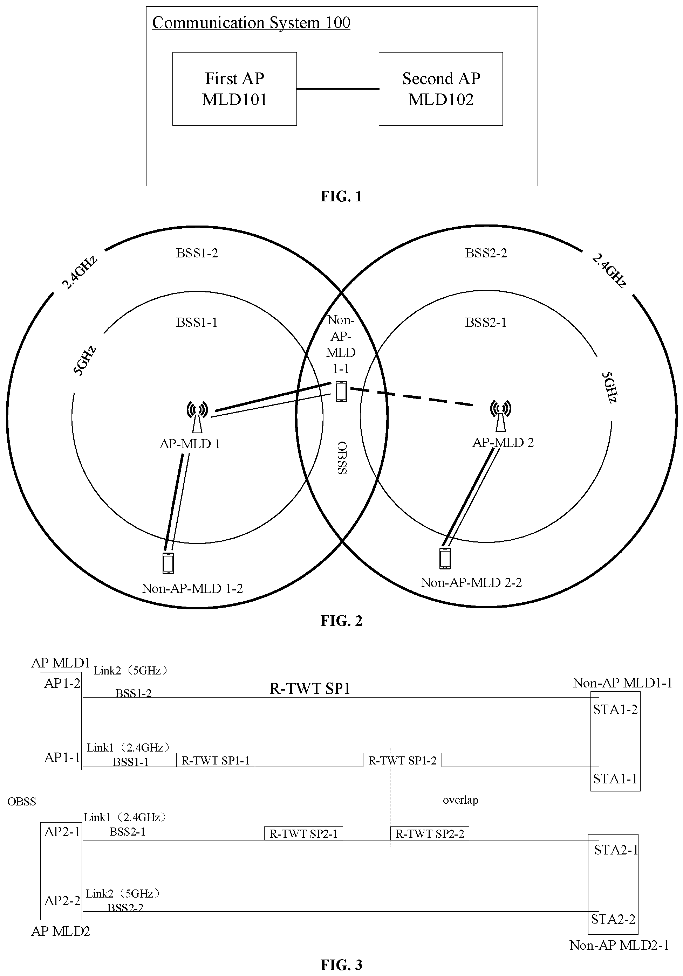

FIG. 1 is an architecture schematic diagram of a communication system according to embodiments of the present disclosure.

As shown in FIG. 1, the communication system 100 includes a first AP MLD 101 and a second AP MLD 102.

In some embodiments, the first AP MLD 101 and the second AP MLD 102 include multiple affiliated APs. Each AP is equivalent to a bridge connecting a wired network and a wireless network, and its main function is to connect various wireless network clients together and then connect the wireless network to Ethernet. Specifically, each AP can be a terminal device or a network device with a wireless fidelity chip.

The first AP MLD 101 and the second AP MLD 102 can communicate with a STA or a non-AP MLD including multiple affiliated STAs, and the STA can be a device including a wireless communication chip, a wireless sensor or a wireless communication terminal supporting a WiFi communication function. Optionally, the wireless communication terminal can be at least one of, for example, a mobile phone, a wearable device, an Internet of Things device supporting a WiFi communication function, a car with a WiFi communication function, a smart car, a tablet computer (Pad), a computer with a wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but not limited thereto.

Each affiliated AP of the first AP MLD 101 and the second AP MLD 102 respectively operates on the communication links corresponding to different frequency bands, such as the communication links corresponding to 2.4GHz, 5GHz, and 6GHz. Similarly, each affiliated STA of the Non-AP MLD also operates on the communication links corresponding to different frequency bands, and each affiliated AP of the first AP MLD 101 and the second AP MLD 102 can establish a communication link with the STA of the corresponding frequency band and communicate.

It can be understood that the communication system described in these embodiments of the present disclosure is for the purpose of more clearly illustrating the technical solution of these embodiments of the present disclosure, and does not constitute a limitation on the technical solution proposed in these embodiments of the present disclosure. A person of ordinary skill in the art can know that with the evolution of the system architecture and the emergence of new service scenarios, the technical solution proposed in these embodiments of the present disclosure is also applicable to similar technical problems.

In a wireless LAN, a Basic Service Set (BSS) can be composed of an AP (AP MLD) and a STA (Non-AP MLD) that communicates with the AP (AP MLD). If the coverage of two or more BSSs in the same frequency band overlaps, an Overlapping Basic Service Set (OBSS) is formed. As shown in FIG. 2, the APs affiliated with AP MLD 1 and AP MLD 2 can form BSS 1-1 and BSS 2-1 in the 5GHz frequency band, respectively, and the APs affiliated with AP MLD 1 and AP MLD 2 can form BSS 1-2 and BSS 2-2 in the 2.4GHz frequency band, respectively. Non-AP MLD 1-2 and Non-AP MLD 1-1 are associated with AP MLD 1, and Non-AP MLD 2-2 is associated with AP MLD 2.

With the development trend of high frequency bands, WLAN equipment deployment is becoming more and more dense, and the phenomenon of overlapping basic service sets is becoming more and more common. In the prior art, R-TWT is a protection mechanism defined from the perspective of transmitting low-latency services within a single basic service set. The STA in a single BSS suspends or terminates its transmission opportunities or other non-low-latency service transmissions before joining the SP of the R-TWT to ensure the effective transmission of low-latency services. When the scheduling members of the R-TWT are located in the OBSS, its low-latency service transmission will be interfered with by the AP that forms the OBSS, especially when the R-TWT SPs of multiple APs that form the OBSS overlap, the interference is more serious. On the other hand, the STA in the BSS knows the R-TWT SP of the AP in the BSS, but the APs do not know the R-TWT SP scheduled by the AP, which may lead to transmission overlap, collision, retransmission, and hidden node problems in different BSSs, which in turn leads to higher transmission delays.

As shown in FIG. 3, AP MLD 1 includes affiliated AP 1-2 and affiliated AP 1-1, AP MLD 2 includes affiliated AP 2-1 and affiliated AP 2-2, Non-AP MLD 1-1 includes affiliated STA 1-2 and affiliated STA 1-1, and Non-AP MLD includes affiliated STA 2-1 and affiliated STA 2-2.

AP 1-2 and STA 1-2 operate on the communication link (link2) corresponding to the 5GHz frequency band and perform low-latency service transmission within R-TWT SP 1, and AP 2-2 and STA 2-2 operate on the communication link (link2) corresponding to the 5GHz frequency band and communicate.

AP 1-1 and STA 1-1 operate on the communication link (link1) corresponding to the 2.4GHz frequency band, and perform low-latency service transmission in R-TWT SP 1-1 and R-TWT SP 1-2. AP 2-1 and STA 2-1 operate on the communication link (link1) corresponding to the 2.4GHz frequency band, and perform low-latency service transmission in R-TWT SP 2-1 and R-TWT SP 2-2.

AP 1-2 and STA 1-2 form BSS 1-2 in the 5 GHz frequency band, AP 1-1 and STA 1-1 form BSS 1-1 in the 2.4 GHz frequency band, AP 2-1 and STA 2-1 form BSS 2-1 in the 2.4 GHz frequency band, and AP 2-2 and STA 2-2 form BSS 2-2 in the 5 GHz frequency band.

When BSS 1-1 and BSS 2-1 form an OBSS, since R-TWT SP 1-2 and AP MLD SP 2-2 overlap, the low-latency service transmission between AP 1-1 and STA 1-1 and the low-latency service transmission between AP 2-1 and STA 2-1 will interfere with each other.

To solve the foregoing problems, embodiments of the present disclosure provide a communication method to reduce interference in low-latency service transmission while ensuring transmission efficiency and throughput.

Following embodiments of the present disclosure may be applied to the communication system 100 shown in FIG. 1, or part of the subject, but are not limited thereto. The subjects shown in FIG. 1 are examples, and the communication system may include all or part of the subjects in FIG. 1, or may include other subjects other than FIG. 1. The number and form of the subjects are arbitrary. The subjects may be physical or virtual. The connection relationship between the subjects is an example, and the subjects may be connected or disconnected. The connection may be in any manner, may be a direct connection or an indirect connection, and may be a wired connection or a wireless connection.

These embodiments of the present disclosure may be applied to a wireless local area network (WLAN), such as an IEEE 802.11 system standard, such as the 802.11a/b/g standard, the 802.11n standard, the 802.11ac standard, the 802.11ax standard, or its next generation, such as the 802.11bn, 802.11bf, 802.11be standard, the 802.11be standard is also known as Wi-Fi 7 or an extremely high-throughput (EHT) standard or a later generation standard. Alternatively, these embodiments of the present disclosure may also be applied to a wireless local area network system such as an Internet of Things (IoT) network or a Vehicle to X (V2X) network. Of course, these embodiments of the present disclosure can also be applied to other possible communication systems, such as long term evolution (LTE) system, LTE frequency division duplex (FDD) system, LTE time division duplex (TDD), universal mobile telecommunication system (UMTS), worldwide interoperability for microwave access (WiMAX) communication system, and future fifth generation (5G) communication system.

The technical solutions in these embodiments of the present disclosure will be further described clearly and completely below in combination with the accompanying drawings. The described embodiments are only part of these embodiments of the present disclosure, not all of these embodiments. Based on these embodiments in the present disclosure, all other embodiments obtained by ordinary technicians in this field without creative work are within the scope of protection of the present disclosure.

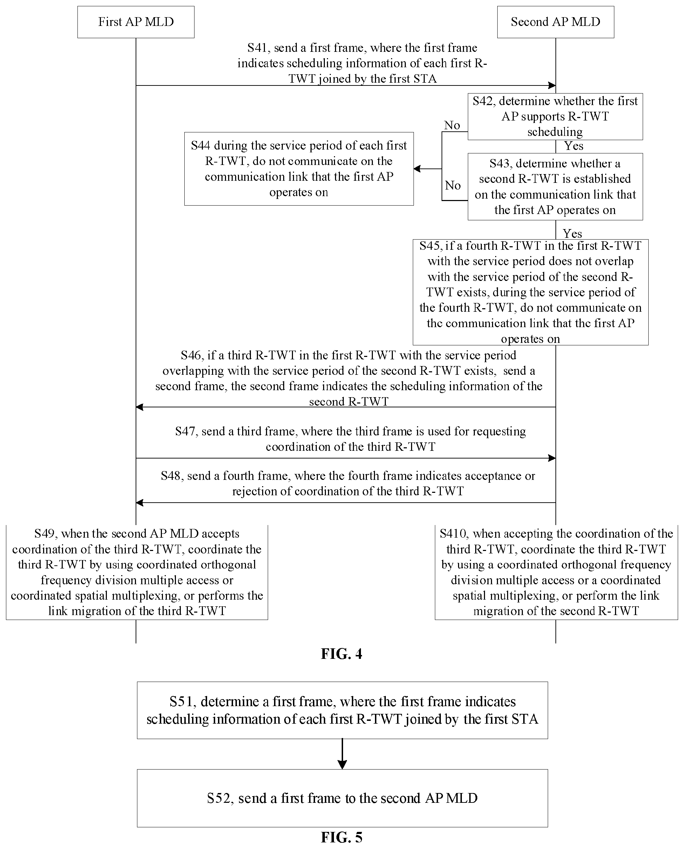

FIG. 4 is a schematic diagram of a communication method interaction according to embodiments of the present disclosure. The communication method shown in FIG. 4 includes the followings.

In Step S41, the first AP MLD sends a first frame to the second AP MLD, where the first frame indicates scheduling information of each first R-TWT joined by the first STA.

In these embodiments of the present disclosure, the first AP MLD and the second AP MLD form an overlapping basic service set OBSS in the first frequency band. In other words, the BSS formed by the first AP MLD in the first frequency band overlaps with the BSS formed by the second AP MLD in the first frequency band.

The first STA is affiliated with the first Non-AP MLD, and the first STA operates on a communication link corresponding to the first frequency band.

The first STA can be a scheduling member of at least one R-TWT of the first AP MLD, used for performing low-latency service transmission within the service period of each R-TWT joined. Each first R-TWT joined by the first STA indicated by the first frame is an R-TWT established by the first AP MLD.

The first AP MLD is associated with the first Non-AP MLD, and the first STA is located in the OBSS formed, in the first frequency band, by the first AP MLD and the second AP MLD.

As an example, the first AP MLD may be AP MLD 1 in FIG. 2, the second AP MLD may be AP MLD2 in FIG. 2, and when the first frequency band is 2.4 GHz, the first STA is an affiliated STA of Non-AP MLD 1-1 in FIG. 2, and operates on a communication link corresponding to 2.4 GHz.

In embodiments of the present disclosure, the first frame includes at least one first information field, and each first information field indicates scheduling information of a first R-TWT joined by the first STA.

Optionally, each first information field may include a first information sub-field, and the first information sub-field indicates the identification information of the corresponding first R-TWT, such as a broadcast target wake time identifier (Broadcast TWT ID) that can be used for indicating the corresponding first R-TWT.

Optionally, each first information field may include a second information sub-field, and the second information sub-field indicates a target wake time of the corresponding first R-TWT.

Optionally, each first information field may include a third information sub-field, and the third information sub-field indicates the duration of the corresponding first R-TWT.

Optionally, each first information field may include a fourth information sub-field, the fourth information sub-field includes multiple first identification bits, each first identification bit indicates through a first value that the affiliated STA operating on the communication link corresponding to a frequency band of the Non-AP MLD associated with the first AP MLD is a scheduling member of the corresponding first R-TWT, and indicates through a second value that the affiliated STA operating on the communication link corresponding to a frequency band of the Non-AP MLD associated with the first AP MLD is not a scheduling member of the corresponding first R-TWT.

That is, each first information field may include a fourth information sub-field, and the fourth information sub-field includes multiple first identification bits, each first identification bit indicates, through a first value, that an affiliated STA of the first AP MLD is a scheduling member of the corresponding first R-TWT, and indicates, through a second value, that an affiliated STA of the first AP MLD is not a scheduling member of the corresponding first R-TWT. Each affiliated STA of the first AP MLD operates on a different communication link, and each first identification bit corresponds to a communication link of a frequency band.

It should be noted that each first information field may include at least one of a first information sub-field, a second information sub-field, a third information sub-field or a fourth information sub-field.

In Step S42, the second AP MLD determines whether the first AP supports R-TWT scheduling.

In these embodiments of the present disclosure, after receiving the first frame, the second AP MLD may determine the first AP from the affiliated APs.

The first AP is affiliated with the second AP MLD and operates on a communication link corresponding to the first frequency band.

As an example, the first AP MLD may be AP MLD 1 in FIG. 2, the second AP MLD may be AP MLD 2 in FIG. 2, and when the first frequency band is 2.4 GHz, the first STA is an affiliated STA of Non-AP MLD 1-1 in FIG. 2, and operates on a communication link corresponding to 2.4 GHz. The first AP is an affiliated AP of AP MLD 2 in FIG. 2, and operates on a communication link corresponding to 2.4 GHz.

In these embodiments of the present disclosure, after the second AP MLD determines the first AP, it can determine whether the first AP supports R-TWT scheduling. In other words, determine whether the first AP supports the R-TWT mechanism to perform low-latency service transmission within the service period of R-TWT.

If the first AP does not support R-TWT scheduling, Step S44 is executed.

If the first AP supports R-TWT scheduling, Step S43 is executed.

In Step S43, the second AP MLD determines whether a second R-TWT is established on the communication link that the first AP operates on.

In these embodiments of the present disclosure, if the second AP MLD determines that the second R-TWT does not be established on the communication link that the first AP operates on, then no communication is performed on the communication link that the first AP operates on during the service period of each first R-TWT. That is, during the service period of each first R-TWT, the communication of the first AP during the service period of each first R-TWT is suspended or postponed.

If the second AP MLD determines that the second R-TWT is established on the communication link that the first AP operates on, Step S45 is executed.

In Step S44, during the service period of each first R-TWT, the second AP MLD does not communicate on the communication link that the first AP operates on.

That is, during the service period of each first R-TWT, the second AP MLD suspends or postpones the communication of the first AP during the service period of each first R-TWT.

In Step S45, if there is a fourth R-TWT in the first R-TWT with the service period does not overlap with the service period of the second R-TWT, during the service period of the fourth R-TWT, the second AP MLD does not communicate on the communication link that the first AP operates on.

In these embodiments of the present disclosure, when there is a fourth R-TWT in each first R-TWT with service period does not overlap with the service period of the second R-TWT, the second AP MLD does not communicate on the communication link that the first AP operates on during the service period of the fourth R-TWT. That is, during the service period of the fourth R-TWT, the second AP MLD suspends or postpones the communication of the first AP during the service period of each first R-TWT.

In Step S46, if there is a third R-TWT in the first R-TWT with the service period overlapping with the service period of the second R-TWT, the second AP MLD sends a second frame to the first AP MLD, and the second frame indicates the scheduling information of the second R-TWT.

In embodiments of the present disclosure, the second frame may include a fifth information sub-field, which indicates identification information of the second R-TWT, such as a broadcast target wake time identifier (Broadcast TWT ID) of the second R-TWT.

Optionally, the second frame may include a sixth information sub-field, where the sixth information sub-field indicates a target wake time of the second R-TWT.

Optionally, the second frame may include a seventh information sub-field, where the seventh information sub-field indicates the duration of the second R-TWT.

Optionally, the second frame may include an eighth information sub-field, the eighth information sub-field including multiple second identification bits, each second identification bit indicating by a first value that an affiliated STA operating on a communication link corresponding to a frequency band of the Non-AP MLD associated with the second AP MLD is a scheduling member of the second R-TWT, and through a second value that an affiliated STA operating on a communication link corresponding to a frequency band of the Non-AP MLD associated with the second AP MLD is not a scheduling member of the second R-TWT.

That is, the second frame may include an eighth information sub-field, the eighth information sub-field includes multiple second identification bits, each second identification bit indicates, through a first value, that an affiliated STA of the second AP MLD is a scheduling member of the second R-TWT, and indicates, through a second value, that an affiliated STA of the second AP MLD is not a scheduling member of the second R-TWT. Each affiliated STA of the second AP MLD operates on a different communication link, and each second identification bit corresponds to a communication link of a frequency band.

It should be noted that the second frame may include at least one of the fifth information sub-field, the sixth information sub-field, the seventh information sub-field or the eighth information sub-field.

In embodiments of the present disclosure, the second frame may also be used for indicating a third R-TWT with the service period overlapping with the service period of the first R-TWT and the second R-TWT. For example, the second frame may include identification information of the third R-TWT, such as the broadcast target wake time identifier (Broadcast TWT ID) of the third R-TWT.

In embodiments of the present disclosure, the first frame and the second frame may be an R-TWT coordination notification (R-TWT Coordination Notification) frame, an R-TWT coordination indication (R-TWT Coordination Indication) frame, or an R-TWT coordination announcement (R-TWT Coordination Announcement) frame.

In Step S47, the first AP MLD sends a third frame to the second AP MLD, where the third frame is used for requesting coordination of the third R-TWT.

In embodiments of the present disclosure, when there is a third R-TWT with the service period overlapping with the service period of the second R-TWT in the first R-TWT joined by the first STA, the first AP MLD may send a third frame to the second AP MLD to request coordination of the third R-TWT.

In these embodiments of the present disclosure, if all affiliated STAs of the first Non-AP MLD (i.e., the Non-AP MLD to which the first STA is affiliated) are scheduling members of the third R-TWT, or the second R-TWT has been established on all communication links that affiliated APs of the second AP MLD operate on (i.e., all affiliated APs of the second AP MLD perform low-latency service transmission within the service period of the second R-TWT), the third frame is used for requesting coordination of the third R-TWT by using coordinated orthogonal frequency division multiple access or coordinated spatial multiplexing.

If at least one affiliated STA of the first AP MLD is not a scheduling member of the third R-TWT, and the second R-TWT is not established on at least one communication link that the affiliated APs of the second AP MLD operate on (that is, there is at least one affiliated AP of the second AP MLD that does not use the second R-TWT), the third frame is used for requesting link migration of the third R-TWT.

In these embodiments of the present disclosure, the third frame includes an R-TWT coordination type information field, the R-TWT coordination type information field requests through a third value to coordinate the third R-TWT by using a coordinated orthogonal frequency division multiple access, the R-TWT coordination type information field requests through a fourth value to coordinate the third R-TWT by using a coordinated spatial multiplexing, and the R-TWT coordination type information field requests through a fifth value to perform link migration on the third R-TWT.

Optionally, when the third frame is used for requesting coordination of the third R-TWT by using a coordinated orthogonal frequency division multiple access or a coordinated spatial multiplexing, the third frame also includes a corresponding coordination parameter of a coordination mode.

Optionally, when the third frame is used for requesting link migration of the third R-TWT, the third frame also includes a first link identifier, and the first link identifier indicates the first communication link that the third R-TWT is applied to after the link migration is performed for the third R-TWT.

As an example, the first AP MLD sends a third frame to the second AP MLD, and the third frame includes an R-TWT coordination type information field. The R-TWT coordination type information field requests to coordinate the third R-TWT by using a coordinated orthogonal frequency division multiple access through a third value.

The third frame also includes coordination parameters corresponding to the coordinated orthogonal frequency division multiple access mode.

As an example, the first AP MLD sends a third frame to the second AP MLD, and the third frame includes an R-TWT coordination type information field. The R-TWT coordination type information field requests to coordinate the third R-TWT by using coordinated spatial multiplexing through a fourth value.

The third frame also includes coordination parameters corresponding to the coordinated spatial multiplexing.

As an example, the first AP MLD sends a third frame to the second AP MLD, the third frame includes an R-TWT coordination type information field, and the R-TWT coordination type information field requests link migration of the third R-TWT through a fifth value.

The third frame also includes the first link identifier of the first communication link that the third R-TWT is applied to, after link migration is performed for the third R-TWT.

In Step S48, the second AP MLD sends a fourth frame to the first AP MLD, where the fourth frame indicates acceptance or rejection of coordination of the third R-TWT.

In these embodiments of the present disclosure, if the third frame is used for requesting to coordinate the third R-TWT by using coordinated orthogonal frequency division multiple access, the fourth frame indicates acceptance or rejection to use coordinated orthogonal frequency division multiple access to coordinate the third R-TWT. If the third frame is used for requesting the use of coordinated spatial multiplexing to coordinate the third R-TWT, the fourth frame indicates the acceptance or rejection of the use of coordinated spatial multiplexing to coordinate the third R-TWT. If the third frame is used for requesting link migration of the third R-TWT, the fourth frame indicates acceptance or rejection of link migration of the third R-TWT.

In Step S49, when the second AP MLD accepts coordination of the third R-TWT, the first AP MLD coordinates the third R-TWT by using coordinated orthogonal frequency division multiple access or coordinated spatial multiplexing, or performs the link migration of the third R-TWT.

In these embodiments of the present disclosure, when the fourth frame indicates acceptance of coordinated orthogonal frequency division multiple access for coordination of the third R-TWT, the first AP MLD may coordinate the third R-TWT using coordination parameters corresponding to the coordinated orthogonal frequency division multiple access. That is, when low-latency service transmission is performed within the service period of the third R-TWT, the first AP MLD uses coordinated orthogonal frequency division multiple access for spectrum multiplexing to ensure that low-latency service transmission is not interfered with by the first AP.

When the fourth frame indicates acceptance of the coordination of the third R-TWT by using the coordinated spatial multiplexing, the first AP MLD may coordinate the third R-TWT by using coordination parameters corresponding to the coordinated spatial multiplexing. That is, when low-latency service transmission is performed within the service period of the third R-TWT, the first AP MLD uses coordinated spatial multiplexing to perform spatial resource multiplexing to ensure that low-latency service transmission is not interfered with by the first AP.

When the fourth frame indicates acceptance of link migration of the third R-TWT, the first AP MLD may migrate the third R-TWT to other communication links (the first communication link) to avoid overlapping with the service period of the second R-TWT of the first AP on the same communication link, thereby affecting low-latency service transmission.

In Step S410, when accepting the coordination of the third R-TWT, the third R-TWT is coordinated by using a coordinated orthogonal frequency division multiple access or a coordinated spatial multiplexing, or the link migration of the second R-TWT is performed.

In these embodiments of the present disclosure, when the second AP MLD indicates through the fourth frame that it accepts to coordinate the third R-TWT by using the coordinated orthogonal frequency division multiple access mode, it can use the coordination parameters corresponding to the coordinated orthogonal frequency division multiple access mode in the third frame to coordinate the third R-TWT. That is, when low-latency service transmission is performed within the service period of the third R-TWT, the second AP MLD uses the coordinated orthogonal frequency division multiple access mode to perform spectrum multiplexing to ensure that the low-latency service transmission is not interfered with by the first AP.

When the second AP MLD indicates through the fourth frame that it accepts to coordinate the third R-TWT by using the coordinated spatial multiplexing, it can use the coordination parameters corresponding to the coordinated spatial multiplexing in the third frame to coordinate the third R-TWT. That is, when low-latency service transmission is performed within the service period of the third R-TWT, the second AP MLD uses the coordinated spatial multiplexing to multiplex spatial resources to ensure that the low-latency service transmission is not interfered with by the first AP.

When the second AP MLD indicates acceptance of link migration of the third R-TWT through the fourth frame, the second AP MLD may not adjust the second R-TWT. Alternatively, the second AP MLD may migrate the second R-TWT to another communication link (the second communication link) to avoid overlapping with the service period of the third R-TWT on the same communication link, thereby affecting low-latency service transmission.

When the fourth frame indicates acceptance of link migration of the third R-TWT, the first AP MLD can migrate the third R-TWT to the first communication link. If the second AP MLD migrates the second AP MLD to the second communication link, it is to ensure that the first communication link and the second communication link are different.

The communication method involved in these embodiments of the present disclosure may include at least one of the foregoing steps and embodiments. For example, Step S41 may be implemented as an independent embodiment, Step S41-Step S46 may be implemented as an independent embodiment, Step S41-Step S47 may be implemented as an independent embodiment, Step S41-Step S48 may be implemented as an independent embodiment, and Step S41-Step S410 may be implemented as an independent embodiment, but are not limited thereto.

FIG. 5 is a flow chart of a communication method according to embodiments of the present disclosure. As shown in FIG. 5, the method is executed by the first AP MLD, and the method includes the followings.

In Step S51, a first frame is determined, where the first frame indicates scheduling information of each first R-TWT joined by the first STA.

In these embodiments of the present disclosure, the first AP MLD and the second AP MLD form an overlapping basic service set OBSS in the first frequency band. In other words, the BSS formed by the first AP MLD in the first frequency band overlaps with the BSS formed by the second AP MLD in the first frequency band.

The first STA is affiliated with the first Non-AP MLD, and the first STA operates on a communication link corresponding to the first frequency band.

The first AP MLD is associated with the first Non-AP MLD, and the first STA is located in the OBSS formed, in the first frequency band, by the first AP MLD and the second AP MLD.

The first STA can be a scheduling member of at least one R-TWT of the first AP MLD, used for performing low-latency service transmission within the service period of each R-TWT joined. Each first R-TWT joined by the first STA indicated by the first frame is an R-TWT established by the first AP MLD.

In embodiments of the present disclosure, the first frame includes at least one first information field, and each first information field indicates scheduling information of a first R-TWT joined by the first STA.

Optionally, each first information field may include a first information sub-field, and the first information sub-field indicates the identification information of the corresponding first R-TWT, such as a broadcast target wake time identifier (Broadcast TWT ID) that can be used for indicating the corresponding first R-TWT.

Optionally, each first information field may include a second information sub-field, and the second information sub-field indicates a target wake time of the corresponding first R-TWT.

Optionally, each first information field may include a third information sub-field, and the third information sub-field indicates the duration of the corresponding first R-TWT.

Optionally, each first information field may include a fourth information sub-field, the fourth information sub-field includes multiple first identification bits, each first identification bit indicates through a first value that the affiliated STA operating on the communication link corresponding to a frequency band of the Non-AP MLD associated with the first AP MLD is a scheduling member of the corresponding first R-TWT, and indicates through a second value that the affiliated STA operating on the communication link corresponding to a frequency band of the Non-AP MLD associated with the first AP MLD is not a scheduling member of the corresponding first R-TWT.

That is, each first information field may include a fourth information sub-field, and the fourth information sub-field includes multiple first identification bits, each first identification bit indicates, through a first value, that an affiliated STA of the first AP MLD is a scheduling member of the corresponding first R-TWT, and indicates, through a second value, that an affiliated STA of the first AP MLD is not a scheduling member of the corresponding first R-TWT. Each affiliated STA of the first AP MLD operates on a different communication link, and each first identification bit corresponds to a communication link of a frequency band.

It should be noted that each first information field may include at least one of a first information sub-field, a second information sub-field, a third information sub-field or a fourth information sub-field.

In Step S52, a first frame is sent to the second AP MLD.

After determining the first frame, the first AP MLD may send the first frame to the second AP MLD.

The first frame can be an R-TWT coordination notification (R-TWT Coordination Notification) frame, an R-TWT coordination indication (R-TWT Coordination Indication) frame or an R-TWT coordination announcement (R-TWT Coordination Announcement) frame.

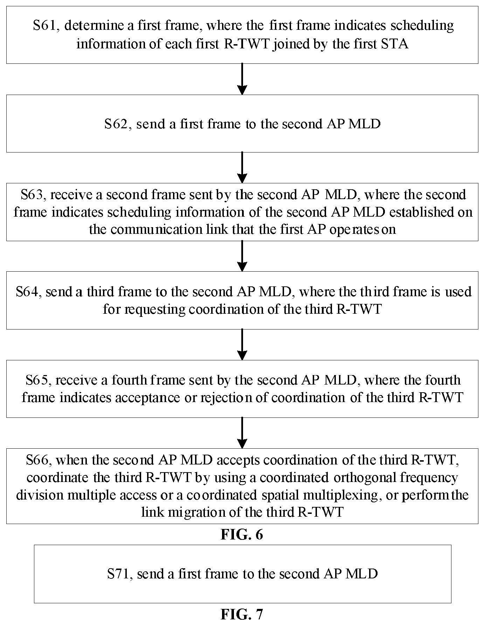

FIG. 6 is a second flow chart of a communication method according to embodiments of the present disclosure. As shown in FIG. 6, the method is executed by the first AP MLD, and the method includes the followings.

In Step S61, a first frame is determined, where the first frame indicates scheduling information of each first R-TWT joined by the first STA.

In Step S62, a first frame is sent to the second AP MLD.

In these embodiments of the present disclosure, the implementation of Step S61-Step S62 can refer to the implementation of Step S51-Step S52 in FIG. 5, which will not be repeated here.

In Step S63, a second frame sent by the second AP MLD is received, where the second frame indicates scheduling information of the second AP MLD established on the communication link that the first AP operates on.

In embodiments of the present disclosure, the first AP is affiliated with the second AP MLD and operates on a communication link corresponding to the first frequency band.

The second frame is sent by the second AP MLD when a second R-TWT has been established on the communication link that the first AP operates on, and the service period of the second R-TWT overlaps with a service period of the at least one first R-TWT.

In embodiments of the present disclosure, the second frame may include a fifth information sub-field, which indicates identification information of the second R-TWT, such as a broadcast target wake time identifier (Broadcast TWT ID) of the second R-TWT.

Optionally, the second frame may include a sixth information sub-field, where the sixth information sub-field indicates a target wake time of the second R-TWT.

Optionally, the second frame may include a seventh information sub-field, where the seventh information sub-field indicates the duration of the second R-TWT.

Optionally, the second frame may include an eighth information sub-field, the eighth information sub-field including multiple second identification bits, each second identification bit indicating by a first value that an affiliated STA operating on a communication link corresponding to a frequency band of the Non-AP MLD associated with the second AP MLD is a scheduling member of the second R-TWT, and through a second value that an affiliated STA operating on a communication link corresponding to a frequency band of the Non-AP MLD associated with the second AP MLD is not a scheduling member of the second R-TWT.

That is, the second frame may include an eighth information sub-field, the eighth information sub-field includes multiple second identification bits, each second identification bit indicates, through a first value, that an affiliated STA of the second AP MLD is a scheduling member of the second R-TWT, and indicates, through a second value, that an affiliated STA of the second AP MLD is not a scheduling member of the second R-TWT. Each affiliated STA of the second AP MLD operates on a different communication link, and each second identification bit corresponds to a communication link of a frequency band.

It should be noted that the second frame may include at least one of the fifth information sub-field, the sixth information sub-field, the seventh information sub-field or the eighth information sub-field.

In embodiments of the present disclosure, the second frame may also be used for indicating a third R-TWT with the service period overlapping with the service period of the first R-TWT and the second R-TWT. For example, the second frame may include identification information of the third R-TWT, such as the broadcast target wake time identifier (Broadcast TWT ID) of the third R-TWT.

In embodiments of the present disclosure, the second frame may be an R-TWT coordination notification (R-TWT Coordination Notification) frame, an R-TWT coordination indication (R-TWT Coordination Indication) frame, or an R-TWT coordination announcement (R-TWT Coordination Announcement) frame.

In Step S64, a third frame is sent to the second AP MLD, where the third frame is used for requesting coordination of the third R-TWT.

In embodiments of the present disclosure, when there is a third R-TWT with the service period overlapping with the service period of the second R-TWT in the first R-TWT joined by the first STA, the first AP MLD may send a third frame to the second AP MLD to request coordination of the third R-TWT.

In these embodiments of the present disclosure, if all affiliated STAs of the first Non-AP MLD (i.e., the Non-AP MLD to which the first STA is affiliated) are scheduling members of the third R-TWT, or the second R-TWT has been established on all communication links that affiliated APs of the second AP MLD operate on (i.e., all affiliated APs of the second AP MLD perform low-latency service transmission within the service period of the second R-TWT), the third frame is used for requesting coordination of the third R-TWT by using coordinated orthogonal frequency division multiple access or coordinated spatial multiplexing.

If at least one affiliated STA of the first AP MLD is not a scheduling member of the third R-TWT, and the second R-TWT is not established on at least one communication link that the affiliated APs of the second AP MLD operate on (that is, there is at least one affiliated AP of the second AP MLD that does not use the second R-TWT), the third frame is used for requesting link migration of the third R-TWT.

In these embodiments of the present disclosure, the third frame includes an R-TWT coordination type information field, the R-TWT coordination type information field requests through a third value to coordinate the third R-TWT by using a coordinated orthogonal frequency division multiple access, the R-TWT coordination type information field requests through a fourth value to coordinate the third R-TWT by using a coordinated spatial multiplexing, and the R-TWT coordination type information field requests through a fifth value to perform link migration on the third R-TWT.

Optionally, when the third frame is used for requesting coordination of the third R-TWT by using a coordinated orthogonal frequency division multiple access or a coordinated spatial multiplexing, the third frame also includes a corresponding coordination parameter of a coordination mode.

Optionally, when the third frame is used for requesting link migration of the third R-TWT, the third frame also includes a first link identifier, and the first link identifier indicates the first communication link that the third R-TWT is applied to after the link migration is performed for the third R-TWT.

As an example, the first AP MLD sends a third frame to the second AP MLD, and the third frame includes an R-TWT coordination type information field. The R-TWT coordination type information field requests to coordinate the third R-TWT by using a coordinated orthogonal frequency division multiple access through a third value.

The third frame also includes coordination parameters corresponding to the coordinated orthogonal frequency division multiple access mode.

As an example, the first AP MLD sends a third frame to the second AP MLD, and the third frame includes an R-TWT coordination type information field. The R-TWT coordination type information field requests to coordinate the third R-TWT by using coordinated spatial multiplexing through a fourth value.

The third frame also includes coordination parameters corresponding to the coordinated spatial multiplexing.

As an example, the first AP MLD sends a third frame to the second AP MLD, the third frame includes an R-TWT coordination type information field, and the R-TWT coordination type information field requests link migration of the third R-TWT through a fifth value.

The third frame also includes the first link identifier of the first communication link that the third R-TWT is applied to, after link migration is performed for the third R-TWT.

In Step S65, a fourth frame sent by the second AP MLD is received, where the fourth frame indicates acceptance or rejection of coordination of the third R-TWT.

In these embodiments of the present disclosure, if the third frame is used for requesting to coordinate the third R-TWT by using coordinated orthogonal frequency division multiple access, the fourth frame indicates acceptance or rejection to use coordinated orthogonal frequency division multiple access to coordinate the third R-TWT. If the third frame is used for requesting the use of coordinated spatial multiplexing to coordinate the third R-TWT, the fourth frame indicates the acceptance or rejection of the use of coordinated spatial multiplexing to coordinate the third R-TWT. If the third frame is used for requesting link migration of the third R-TWT, the fourth frame indicates the acceptance or rejection of link migration of the third R-TWT.

In Step S66, when the second AP MLD accepts coordination of the third R-TWT, the third R-TWT is coordinated by using a coordinated orthogonal frequency division multiple access or a coordinated spatial multiplexing, or the link migration of the third R-TWT is performed.

In these embodiments of the present disclosure, when the fourth frame indicates acceptance of coordinated orthogonal frequency division multiple access for coordination of the third R-TWT, the first AP MLD may coordinate the third R-TWT using coordination parameters corresponding to the coordinated orthogonal frequency division multiple access. That is, when low-latency service transmission is performed within the service period of the third R-TWT, the first AP MLD uses coordinated orthogonal frequency division multiple access for spectrum multiplexing to ensure that low-latency service transmission is not interfered with by the first AP.

When the fourth frame indicates acceptance of the coordination of the third R-TWT by using the coordinated spatial multiplexing, the first AP MLD may coordinate the third R-TWT by using coordination parameters corresponding to the coordinated spatial multiplexing. That is, when low-latency service transmission is performed within the service period of the third R-TWT, the first AP MLD uses coordinated spatial multiplexing to perform spatial resource multiplexing to ensure that low-latency service transmission is not interfered with by the first AP.

When the fourth frame indicates acceptance of link migration of the third R-TWT, the first AP MLD may migrate the third R-TWT to other communication links (the first communication link) to avoid overlapping with the service period of the second R-TWT of the first AP on the same communication link, thereby affecting low-latency service transmission.

The communication method involved in these embodiments of the present disclosure may include at least one of the foregoing steps and embodiments. For example, Step S61 may be implemented as an independent embodiment, Steps S61-S62 may be implemented as an independent embodiment, Steps S61-S63 may be implemented as an independent embodiment, Steps S61-S64 may be implemented as an independent embodiment, and Steps S61-S65 may be implemented as an independent embodiment, but are not limited thereto.

FIG. 7 is a third flow chart of a communication method according to embodiments of the present disclosure. As shown in FIG. 7, the method is executed by the second AP MLD, and the method includes the followings.

In Step S71, a first frame is received, where the first frame indicates scheduling information of each first R-TWT joined by the first STA.

In these embodiments of the present disclosure, the first AP MLD and the second AP MLD form an overlapping basic service set OBSS in the first frequency band. In other words, the BSS formed by the first AP MLD in the first frequency band overlaps with the BSS formed by the second AP MLD in the first frequency band.

The first STA is affiliated with the first Non-AP MLD, and the first STA operates on a communication link corresponding to the first frequency band.

The first AP MLD is associated with the first Non-AP MLD, and the first STA is located in the OBSS formed, in the first frequency band, by the first AP MLD and the second AP MLD.

The first STA can be a scheduling member of at least one R-TWT of the first AP MLD, used for performing low-latency service transmission within the service period of each R-TWT joined. Each first R-TWT joined by the first STA indicated by the first frame is an R-TWT established by the first AP MLD.

In embodiments of the present disclosure, the first frame includes at least one first information field, and each first information field indicates scheduling information of a first R-TWT joined by the first STA.

Optionally, each first information field may include a first information sub-field, and the first information sub-field indicates the identification information of the corresponding first R-TWT, such as a broadcast target wake time identifier (Broadcast TWT ID) that can be used for indicating the corresponding first R-TWT.

Optionally, each first information field may include a second information sub-field, and the second information sub-field indicates a target wake time of the corresponding first R-TWT.

Optionally, each first information field may include a third information sub-field, and the third information sub-field indicates the duration of the corresponding first R-TWT.

Optionally, each first information field may include a fourth information sub-field, the fourth information sub-field includes multiple first identification bits, each first identification bit indicates through a first value that the affiliated STA operating on the communication link corresponding to a frequency band of the Non-AP MLD associated with the first AP MLD is a scheduling member of the corresponding first R-TWT, and indicates through a second value that the affiliated STA operating on the communication link corresponding to a frequency band of the Non-AP MLD associated with the first AP MLD is not a scheduling member of the corresponding first R-TWT.

That is, each first information field may include a fourth information sub-field, and the fourth information sub-field includes multiple first identification bits, each first identification bit indicates, through a first value, that an affiliated STA of the first AP MLD is a scheduling member of the corresponding first R-TWT, and indicates, through a second value, that an affiliated STA of the first AP MLD is not a scheduling member of the corresponding first R-TWT. Each affiliated STA of the first AP MLD operates on a different communication link, and each first identification bit corresponds to a communication link of a frequency band.

It should be noted that each first information field may include at least one of the first information sub-field, the second information sub-field, the third information sub-field or the fourth information sub-field.

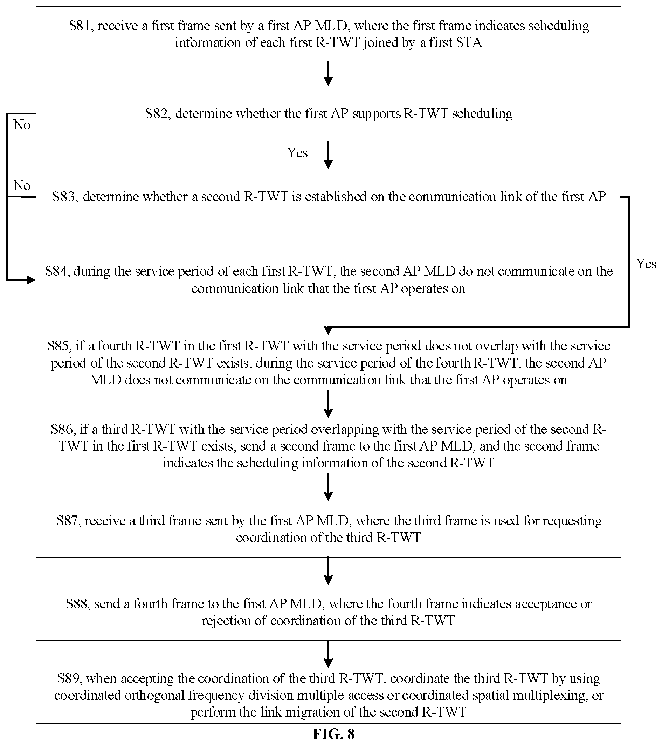

FIG. 8 is a fourth flow chart of a communication method according to embodiments of the present disclosure. As shown in FIG. 8, the method is executed by the second AP MLD, and the method includes the followings.

In Step S81, a first frame sent by a first AP MLD is received, where the first frame indicates scheduling information of each first R-TWT joined by a first STA.

In these embodiments of the present disclosure, the implementation of Step S81 can refer to the implementation of Step S71 in FIG. 7, which will not be repeated here.

In Step S82, it is determined whether the first AP supports R-TWT scheduling.

In these embodiments of the present disclosure, after receiving the first frame, the second AP MLD may determine the first AP from the affiliated APs.

The first AP is affiliated with the second AP MLD and operates on a communication link corresponding to the first frequency band.

In these embodiments of the present disclosure, after the second AP MLD determines the first AP, it can determine whether the first AP supports R-TWT scheduling. In other words, determine whether the first AP supports the R-TWT mechanism to perform low-latency service transmission within the service period of R-TWT.

If the first AP does not support R-TWT scheduling, Step S84 is executed.

If the first AP supports R-TWT scheduling, Step S83 is executed.

In Step S83, it is determined whether a second R-TWT is established on the communication link of the first AP.

In these embodiments of the present disclosure, if the second AP MLD determines that the second R-TWT does not be established on the communication link of the first AP, then no communication is performed on the communication link of the first AP during the service period of each first R-TWT. That is, during the service period of each first R-TWT, the communication of the first AP during the service period of each first R-TWT is suspended or postponed.

If the second AP MLD determines that the second R-TWT is established on the communication link of the first AP, Step S85 is executed.

In Step S84, during the service period of each first R-TWT, the second AP MLD does not communicate on the communication link that the first AP operates on.

That is, during the service period of each first R-TWT, the second AP MLD suspends or postpones the communication of the first AP during the service period of each first R-TWT.

In Step S85, if there is a fourth R-TWT in the first R-TWT with the service period does not overlap with the service period of the second R-TWT, during the service period of the fourth R-TWT, the second AP MLD does not communicate on the communication link that the first AP operates on.

In these embodiments of the present disclosure, when there is a fourth R-TWT in each first R-TWT with the service period does not overlap with the service period of the second R-TWT, the second AP MLD does not communicate on the communication link that the first AP operates on during the service period of the fourth R-TWT. That is, during the service period of the fourth R-TWT, the second AP MLD suspends or postpones the communication of the first AP during the service period of each first R-TWT.

In Step S86, if there is a third R-TWT with the service period overlapping with the service period of the second R-TWT in the first R-TWT, the second AP MLD sends a second frame to the first AP MLD, and the second frame indicates the scheduling information of the second R-TWT.

In embodiments of the present disclosure, the second frame may include a fifth information sub-field, which indicates identification information of the second R-TWT, such as a broadcast target wake time identifier (Broadcast TWT ID) of the second R-TWT.

Optionally, the second frame may include a sixth information sub-field, where the sixth information sub-field indicates a target wake time of the second R-TWT.

Optionally, the second frame may include a seventh information sub-field, where the seventh information sub-field indicates the duration of the second R-TWT.

Optionally, the second frame may include an eighth information sub-field, the eighth information sub-field including multiple second identification bits, each second identification bit indicating by a first value that an affiliated STA operating on a communication link corresponding to a frequency band of the Non-AP MLD associated with the second AP MLD is a scheduling member of the second R-TWT, and through a second value that an affiliated STA operating on a communication link corresponding to a frequency band of the Non-AP MLD associated with the second AP MLD is not a scheduling member of the second R-TWT.

That is, the second frame may include an eighth information sub-field, the eighth information sub-field includes multiple second identification bits, each second identification bit indicates, through a first value, that an affiliated STA of the second AP MLD is a scheduling member of the second R-TWT, and indicates, through a second value, that an affiliated STA of the second AP MLD is not a scheduling member of the second R-TWT. Each affiliated STA of the second AP MLD operates on a different communication link, and each second identification bit corresponds to a communication link of a frequency band.

It should be noted that the second frame may include at least one of the fifth information sub-field, the sixth information sub-field, the seventh information sub-field or the eighth information sub-field.

In embodiments of the present disclosure, the second frame may also be used for indicating a third R-TWT with the service period overlapping with the service period of the first R-TWT and the service period of the second R-TWT. For example, the second frame may include identification information of the third R-TWT, such as a broadcast target wake time identifier (Broadcast TWT ID) of the third R-TWT.

In embodiments of the present disclosure, the first frame and the second frame may be an R-TWT coordination notification (R-TWT Coordination Notification) frame, an R-TWT coordination indication (R-TWT Coordination Indication) frame, or an R-TWT coordination announcement (R-TWT Coordination Announcement) frame.

In Step S87, a third frame sent by the first AP MLD is received, where the third frame is used for requesting coordination of the third R-TWT.

In these embodiments of the present disclosure, if all affiliated STAs of the first Non-AP MLD (i.e., the Non-AP MLD to which the first STA is affiliated) are scheduling members of the third R-TWT, or the second R-TWT has been established on all communication links that affiliated APs of the second AP MLD operate on (i.e., all affiliated APs of the second AP MLD perform low-latency service transmission within the service period of the second R-TWT), the third frame is used for requesting coordination of the third R-TWT by using coordinated orthogonal frequency division multiple access or coordinated spatial multiplexing.

If at least one affiliated STA of the first AP MLD is not a scheduling member of the third R-TWT, and the second R-TWT is not established on at least one communication link that the affiliated APs of the second AP MLD operate on (that is, there is at least one affiliated AP of the second AP MLD that does not use the second R-TWT), the third frame is used for requesting link migration of the third R-TWT.

In these embodiments of the present disclosure, the third frame includes an R-TWT coordination type information field, the R-TWT coordination type information field requests through a third value to coordinate the third R-TWT by using a coordinated orthogonal frequency division multiple access, the R-TWT coordination type information field requests through a fourth value to coordinate the third R-TWT by using a coordinated spatial multiplexing, and the R-TWT coordination type information field requests through a fifth value to perform link migration on the third R-TWT.

Optionally, when the third frame is used for requesting coordination of the third R-TWT by using a coordinated orthogonal frequency division multiple access or a coordinated spatial multiplexing, the third frame also includes a corresponding coordination parameter of a coordination mode.

Optionally, when the third frame is used for requesting link migration of the third R-TWT, the third frame also includes a first link identifier, and the first link identifier indicates the first communication link that the third R-TWT is applied to after the link migration is performed for the third R-TWT.

As an example, the second AP MLD receives the third frame sent by the first AP MLD, and the third frame includes an R-TWT coordination type information field. The R-TWT coordination type information field requests to coordinate the third R-TWT by using a coordinated orthogonal frequency division multiple access through a third value.

The third frame also includes coordination parameters corresponding to the coordinated orthogonal frequency division multiple access mode.

As an example, the second AP MLD receives the third frame sent by the first AP MLD, and the third frame includes an R-TWT coordination type information field. The R-TWT coordination type information field requests to coordinate the third R-TWT by using coordinated spatial multiplexing through a fourth value.

The third frame also includes coordination parameters corresponding to the coordinated spatial multiplexing.

As an example, the second AP MLD receives a third frame sent by the first AP MLD, where the third frame includes an R-TWT coordination type information field, and the R-TWT coordination type information field requests link migration of the third R-TWT through a fifth value.

The third frame also includes the first link identifier of the first communication link that the third R-TWT is applied to, after link migration is performed for the third R-TWT.

In Step S88, a fourth frame is sent to the first AP MLD, where the fourth frame indicates acceptance or rejection of coordination of the third R-TWT.

In these embodiments of the present disclosure, if the third frame is used for requesting to coordinate the third R-TWT by using coordinated orthogonal frequency division multiple access, the fourth frame indicates acceptance or rejection to use coordinated orthogonal frequency division multiple access to coordinate the third R-TWT. If the third frame is used for requesting the use of coordinated spatial multiplexing to coordinate the third R-TWT, the fourth frame indicates the acceptance or rejection of the use of coordinated spatial multiplexing to coordinate the third R-TWT. If the third frame is used for requesting link migration of the third R-TWT, the fourth frame indicates acceptance or rejection of link migration of the third R-TWT.

In Step S89, when accepting the coordination of the third R-TWT, the third R-TWT is coordinated by using coordinated orthogonal frequency division multiple access or coordinated spatial multiplexing, or the link migration of the second R-TWT is performed.

In these embodiments of the present disclosure, when the second AP MLD indicates through the fourth frame that it accepts to coordinate the third R-TWT by using the coordinated orthogonal frequency division multiple access mode, it can use the coordination parameters corresponding to the coordinated orthogonal frequency division multiple access mode in the third frame to coordinate the third R-TWT. That is, when low-latency service transmission is performed within the service period of the third R-TWT, the second AP MLD uses the coordinated orthogonal frequency division multiple access mode to perform spectrum multiplexing to ensure that the low-latency service transmission is not interfered with by the first AP.

When the second AP MLD indicates through the fourth frame that it accepts to coordinate the third R-TWT by using the coordinated spatial multiplexing, it can use the coordination parameters corresponding to the coordinated spatial multiplexing in the third frame to coordinate the third R-TWT. That is, when low-latency service transmission is performed within the service period of the third R-TWT, the second AP MLD uses the coordinated spatial multiplexing to multiplex spatial resources to ensure that the low-latency service transmission is not interfered with by the first AP.

When the second AP MLD indicates acceptance of link migration of the third R-TWT through the fourth frame, the second AP MLD may not adjust the second R-TWT. Alternatively, the second AP MLD may migrate the second R-TWT to another communication link (the second communication link) to avoid overlapping with the service period of the third R-TWT on the same communication link, thereby affecting low-latency service transmission.

When the fourth frame indicates acceptance of link migration of the third R-TWT, the first AP MLD can migrate the third R-TWT to the first communication link. If the second AP MLD migrates the second AP MLD to the second communication link, it is to ensure that the first communication link and the second communication link are different.

The communication method involved in these embodiments of the present disclosure may include at least one of the foregoing steps and embodiments. For example, Step S81 may be implemented as an independent embodiment, Steps S81-S86 may be implemented as an independent embodiment, Steps S81-S87 may be implemented as an independent embodiment, Steps S81-S88 may be implemented as an independent embodiment, and Steps S81-S89 may be implemented as an independent embodiment, but are not limited thereto.

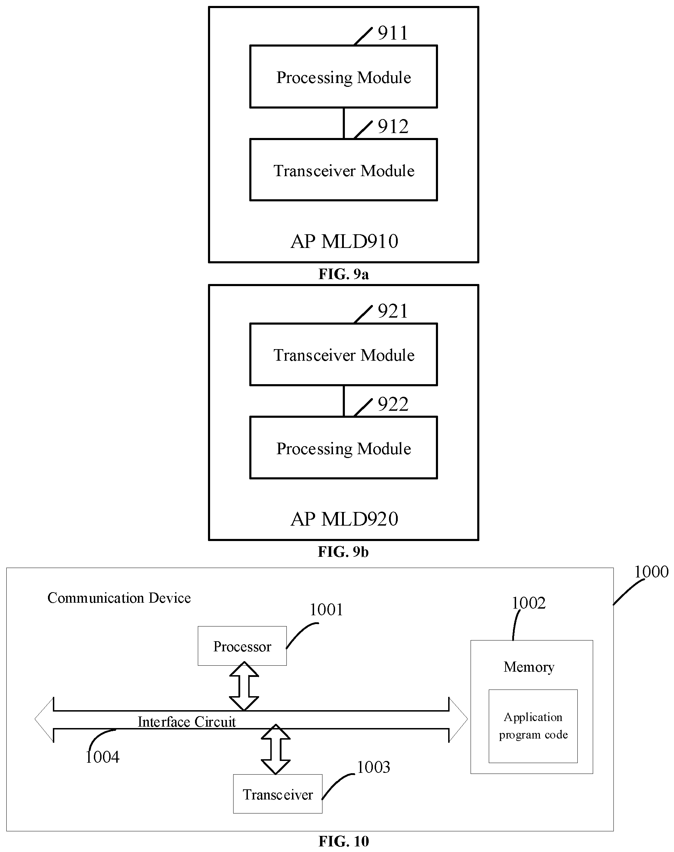

FIG. 9a is a structure schematic diagram of an AP MLD according to embodiments of the present disclosure. As shown in FIG. 9a, the AP MLD 910 may include: a processing module 911 and a transceiver module 912.

In some embodiments, the processing module 911 is configured to determine a first frame, where the first frame indicates scheduling information of each first restricted target wake time R-TWT joined by the first station device STA.

The first STA is affiliated with the first station device Non-AP MLD supporting multiple links and operates on the communication link corresponding to the first frequency band; the first Non-AP MLD is associated with the first AP MLD; the first STA is located in the overlapping basic service set OBSS formed, in the first frequency band, by the first AP MLD and the second AP MLD.

The transceiver module 912 is configured to send the first frame to the second AP MLD.

Optionally, the processing module 911 is used for performing at least one of the processing steps (such as Step S49, Step S51, Step S61, Step S66, but not limited thereto) executed by the first AP MLD in any of the foregoing methods, which will not be repeated here. The transceiver module 912 is used for performing at least one of the transceiver steps (such as Step S41, Step S47, Step S52, Step S62-Step S65, but not limited thereto) executed by the first AP MLD in any of the foregoing methods.

FIG. 9b is another structure schematic diagram of an AP MLD according to embodiments of the present disclosure. As shown in FIG. 9b, the AP MLD 920 may include: a transceiver module 921 and a processing module 922.

In some embodiments, the transceiver module 921 is configured to receive a first frame sent by a first AP MLD, where the first frame indicates scheduling information of each first R-TWT joined by the first STA.

The first STA is affiliated with a first Non-AP MLD and operates on a communication link corresponding to a first frequency band; the first Non-AP MLD is associated with the first AP MLD; the first STA is located in an OBSS formed by the first AP MLD and a second AP MLD on the first frequency band.

Optionally, the transceiver module 921 is used for performing at least one of the transceiver steps (such as Step S46, Step S48, Step S71, Step S81, Step S86-Step S88, but not limited thereto) executed by the second AP MLD in any of the foregoing methods, which will not be repeated here. The processing module 922 is used for performing at least one of the processing steps (such as Step S42-Step S45, Step S410, Step S82-Step S84, Step S89, but not limited thereto) executed by the second AP MLD in any of the foregoing methods.

It should be understood that the division of the foregoing units or modules is only a division of logical functions, and in actual implementation, they can be fully or partially integrated into one physical entity, or they can be physically separated. In addition, the unit or module can be implemented in the form of a processor calling software: for example, it includes a processor, the processor is connected to a memory, the memory stores instructions, and the processor calls the instructions stored in the memory to implement any of the foregoing methods or implement the functions of the foregoing units or modules, where the processor is, for example, a general-purpose processor, such as a central processing unit (CPU) or a microprocessor, and the memory is a memory inside or outside the device. Alternatively, the units or modules in the device can be implemented in the form of hardware circuits, and the functions of some or all of the units or modules can be realized by designing the hardware circuits. The foregoing hardware circuits can be understood as one or more processors; for example, in one implementation, the foregoing hardware circuit is an application-specific integrated circuit (ASIC), and the functions of some or all of the foregoing units or modules are realized by designing the logical relationship of the components in the circuit; for example, in another implementation, the foregoing hardware circuit can be realized by a programmable logic device (PLD), taking a field programmable gate array (FPGA) as an example, which can include a large number of logic gate circuits, and the connection relationship between the logic gate circuits is configured by configuring the configuration file, so as to realize the functions of some or all of the foregoing units or modules. All units or modules of the foregoing devices can be realized in the form of software called by the processor, or in the form of hardware circuits, or in part by software called by the processor, and the rest by hardware circuits.

In embodiments of the present disclosure, the processor is a circuit with signal processing capability. In one implementation, the processor may be a circuit with instruction reading and running capability, such as a central processing unit (CPU), a microprocessor, a graphics processing unit (GPU) (which may be understood as a microprocessor), or a digital signal processor (DSP), and the like; in another implementation, the processor may implement certain functions through the logical relationship of the hardware circuit, and the logical relationship of the foregoing hardware circuit may be fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the foregoing units or modules. In addition, it may also be a hardware circuit designed for artificial intelligence, which may be understood as an ASIC, such as a neural network processing unit (NPU), a tensor processing unit (TPU), a deep learning processing unit (DPU), and the like.

FIG. 10 is a structure schematic diagram of the communication device provided in these embodiments of the present disclosure. The communication device 1000 may be the first AP MLD or the second AP MLD, or may be a chip, a chip system, or a processor that supports the first AP MLD or the second AP MLD to implement any of the foregoing methods. The communication device may be configured to implement the method described in the foregoing method embodiment, and the details may refer to the description in the foregoing method embodiment.

As shown in FIG. 10, the communication device 1000 includes one or more processors 1001. The processor 1001 may be a general-purpose processor or a dedicated processor, for example, a baseband processor or a central processing unit. The baseband processor may be configured to process the communication protocol and the communication data, and the central processing unit may be configured to control the communication device (such as a base station, a baseband chip, a terminal device, a terminal device chip, a DU or a CU, and the like), execute a program, and process the data of the program. The communication device 1000 is configured to execute any of the foregoing methods.

In some embodiments, the communication device 1000 further includes one or more memories 1002 for storing instructions. Optionally, all or part of the memory 1002 may also be outside the communication device 1000.

In some embodiments, the communication device 1000 further includes one or more transceivers 1003. When the communication device 1000 includes one or more transceivers 1003, the transceiver 1003 performs at least one of the communication steps such as sending and/or receiving in the foregoing method (for example, Step S41, Step S46-Step S48, Step S52, Step S62-Step S65, Step S71, Step S81, Step S86-Step S88, but not limited thereto), and the processor 1001 performs at least one of the other steps (for example, Step S42-Step S45, Step S49-Step S410, Step S51, Step S61, Step S66, Step S82-Step S85, Step S89, but not limited thereto).

In some embodiments, the transceiver may include a receiver and/or a transmitter, and the receiver and the transmitter may be separate or integrated. Optionally, the terms such as transceiver, transceiver unit, transceiver circuit, and the like may be replaced with each other, the terms such as transmitter, transmission unit, transmission circuit, and the like may be replaced with each other, and the terms such as receiver, receiving unit, receiving circuit, and the like may be replaced with each other.

In some embodiments, the communication device 1000 may include one or more interface circuits 1004. Optionally, the interface circuit 1004 is connected to the memory 1002, and the interface circuit 1004 may be configured to receive signals from the memory 1002 or other devices, and may be configured to send signals to the memory 1002 or other devices. For example, the interface circuit 1004 may read instructions stored in the memory 1002 and send the instructions to the processor 1001.

The communication device 1000 described in the foregoing embodiment may be the first AP MLD or the second AP MLD, but the scope of the communication device 1000 described in the present disclosure is not limited thereto, and the structure of the communication device 1000 may not be limited by FIG. 10. The communication device may be an independent device or may be part of a larger device. For example, the communication device may be: 1) an independent integrated circuit IC, or a chip, or a chip system or subsystem; (2) a collection of one or more ICs, optionally, the foregoing IC collection may also include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, and the like (6) others, and the like.

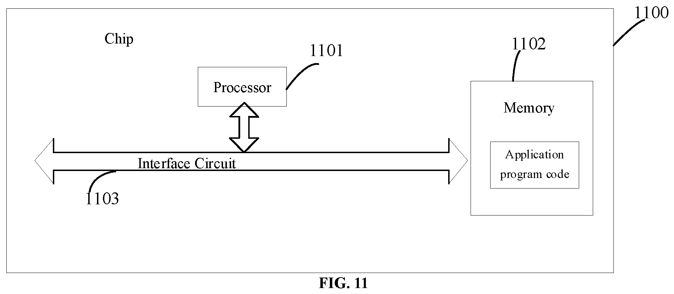

Fig. 11 is a structure schematic diagram of a chip 1100 according to embodiments of the present disclosure. The chip 1100 includes one or more processors 1101, and the chip 1100 is configured to perform any of the foregoing methods.

In some embodiments, the chip 1100 further includes one or more interface circuits 1103. Optionally, the interface circuit 1103 is connected to the memory 1102. The interface circuit 1103 can be configured to receive signals from the memory 1102 or other devices, and the interface circuit 1103 can be configured to send signals to the memory 1102 or other devices. For example, the interface circuit 1103 can read instructions stored in the memory 1102 and send the instructions to the processor 1101.

In some embodiments, the interface circuit 1103 performs at least one of the communication steps such as sending and/or receiving in the foregoing method (for example, Step S41, Step S46-Step S48, Step S52, Step S62-Step S65, Step S71, Step S81, Step S86-Step S88, but not limited to this), and the processor 1101 performs at least one of the other steps (for example, Step S42-Step S45, Step S49-Step S410, Step S51, Step S61, Step S66, Step S82-Step S85, Step S89, but not limited to this).

In some embodiments, terms such as interface circuit, interface, transceiver pin, and transceiver may be used interchangeably.

In some embodiments, the chip 1100 further includes one or more memories 1102 for storing instructions. Alternatively, all or part of the memory 1102 may be outside the chip 1100.

The present disclosure also provides a storage medium, on which instructions are stored. When the instructions are run on the communication device 1000, the communication device 1000 executes any of the foregoing methods. Optionally, the storage medium is an electronic storage medium. Optionally, the storage medium is a computer-readable storage medium, but is not limited to this, and it can also be a storage medium readable by other devices. Optionally, the storage medium can be a non-transitor 11 storage medium, but is not limited to this, and it can also be a temporary storage medium.

The present disclosure also provides a program product, which, when executed by the communication device 1000, enables the communication device 1000 to execute any of the foregoing methods. Optionally, the program product is a computer program product.

The present disclosure also provides a computer program, which, when run on a computer, enables the computer to execute any of the foregoing methods. The foregoing description is only a preferred embodiment of the present disclosure and an explanation of the technical principles used. Those skilled in the art should understand that the scope of disclosure involved in the present disclosure is not limited to the technical solutions formed by a specific combination of the foregoing technical features, but should also cover other technical solutions formed by any combination of the foregoing technical features or their equivalent features without departing from the foregoing disclosed concepts. For example, a technical solution formed by replacing the foregoing features with the technical features with similar functions disclosed in the present disclosure (but not limited to).

## Claims

1. A communication method, wherein the method comprises:
determining, by a first access point multi-link device AP MLD, a first frame, wherein the first frame indicates scheduling information of each first restricted target wake time R-TWT joined by a first station device STA;
wherein, the first STA is affiliated with a first non-access point multi-link device Non-AP MLD and operates on a communication link corresponding to a first frequency band; the first Non-AP MLD is associated with the first AP MLD; the first STA is located in an overlapping basic service set OBSS formed, in the first frequency band, by the first AP MLD and a second AP MLD; and
sending the first frame to the second AP MLD.

2. The method according to claim 1, wherein the first frame comprises at least one first information field, each of the first information fields indicates scheduling information of one first R-TWT joined by the first STA.

3. The method according to claim 2, wherein each of the first information fields comprises at least one of following:
a first information sub-field, wherein the first information sub-field indicates a broadcast target wake time identifier of a corresponding first R-TWT;
a second information sub-field, wherein the second information sub-field indicates a target wake time of the corresponding first R-TWT;
a third information sub-field, wherein the third information sub-field indicates a duration of the corresponding first R-TWT;
a fourth information sub-field, wherein the fourth information sub-field comprises multiple first identification bits, each of the first identification bits indicates, by a first value, that an affiliated STA of the first Non-AP MLD is a scheduling member of the corresponding first R-TWT, and indicates, by a second value, that an affiliated STA of the first Non-AP MLD is not a scheduling member of the corresponding first R-TWT.

4. The method according to claim 1, wherein the method further comprises:
receiving a second frame sent by the second AP MLD, wherein the second frame indicates scheduling information of a second R-TWT established on a communication link that the first AP operates on;
wherein the first AP is affiliated with the second AP MLD and operates on the communication link corresponding to the first frequency band; the second frame is sent by the second AP MLD when a service period of the second R-TWT overlaps with a service period of the at least one first R-TWT.

5. The method according to claim 4, wherein the second frame comprises at least one of following:
a fifth information sub-field, wherein the fifth information sub-field indicates a broadcast target wake time identifier of the second R-TWT;
a sixth information sub-field, wherein the sixth information sub-field indicates a target wake time of the second R-TWT;
a seventh information sub-field, wherein the seventh information sub-field indicates a duration of the second R-TWT;
an eighth information sub-field, wherein the eighth information sub-field comprises multiple second identification bits, each of the second identification bits indicates, by a first value, that an affiliated STA of the second Non-AP MLD is a scheduling member of the second R-TWT, and indicates, by a second value, that an affiliated STA of the second Non-AP MLD is not a scheduling member of the second R-TWT; the second Non-AP MLD is associated with the second AP MLD.

6. The method according to claim 4, wherein the method further comprises:
sending a third frame to the second AP MLD;
wherein the third frame is used for requesting coordination of a third R-TWT, and the third R-TWT is a first R-TWT, among multiple first R-TWTs, with a service period overlapping with the service period of the second R-TWT.

7. The method according to claim 6, wherein the third frame is an R-TWT coordination request frame, and the third frame further comprises a broadcast target wake time identifier of the third R-TWT.

8. The method according to claim 6, wherein if all affiliated STAs of the first Non-AP MLD are scheduling members of the third R-TWT, or the second R-TWT has been established on all communication links that affiliated APs of the second AP MLD operate on, the third frame is used for requesting the coordination of the third R-TWT by using coordinated orthogonal frequency division multiple access or coordinated spatial multiplexing; and
if at least one affiliated STA of the first Non-AP MLD is not the scheduling member of the third R-TWT, and the second R-TWT has not been established on at least one communication link that the affiliated APs of the second AP MLD operate on, the third frame is used for requesting link migration of the third R-TWT.

9. The method according to claim 8, wherein the third frame comprises an R-TWT coordination type information field, the R-TWT coordination type information field requests to coordinate the third R-TWT by using coordinated orthogonal frequency division multiple access by a third value, requests to coordinate the third R-TWT by using coordinated spatial multiplexing by a fourth value, and requests to perform the link migration for the third R-TWT by a fifth value.

10. The method according to claim 8, wherein if the third frame is used for requesting the coordination of the third R-TWT by using coordinated orthogonal frequency division multiple access or coordinated spatial multiplexing, the third frame further comprises a corresponding coordination parameter of a coordination mode;
if the third frame is used for requesting the link migration of the third R-TWT, the third frame further comprises a first link identifier, the first link identifier indicates a first communication link that the third R-TWT is applied to after the link migration is performed for the third R-TWT.

11. The method according to claim 8, wherein the method further comprises:
receiving a fourth frame sent by the second AP MLD, wherein the fourth frame indicates acceptance or rejection of the coordination of the third R-TWT.

12. The method according to claim 11, wherein when the fourth frame indicates the acceptance of the coordination of the third R-TWT by using the coordinated orthogonal frequency division multiple access or the coordinated spatial multiplexing, the third R-TWT is coordinated based on a corresponding coordination parameter of a coordination mode.

13. The method according to claim 11, wherein when the fourth frame indicates acceptance of the link migration of the third R-TWT, the third R-TWT is migrated to a first communication link.

14. The method according to claim 13, wherein when the fourth frame indicates the acceptance of the link migration of the third R-TWT, the fourth frame further comprises a second link identifier;
wherein the second link identifier indicates a second communication link that the second R-TWT is applied to after the link migration is performed, by the second AP MLD, for the second R-TWT, and the first communication link and the second communication link are different.

15. A communication method, wherein the method comprises:
receiving, by a second AP MLD, a first frame sent by a first AP MLD, the first frame indicating scheduling information of each first R-TWT joined by a first STA;
wherein, the first STA is affiliated with a first Non-AP MLD and operates on a communication link corresponding to a first frequency band; the first Non-AP MLD is associated with the first AP MLD; the first STA is located in an OBSS formed, in the first frequency band, by the first AP MLD and a second AP MLD.

16. The method according to claim 15, wherein the first frame comprises at least one first information field, each of the first information fields indicates scheduling information of one first R-TWT joined by the first STA.

17. The method according to claim 16, wherein each of the first information fields comprises at least one of following:
a first information sub-field, the first information sub-field indicating a broadcast target wake time identifier of a corresponding first R-TWT;
a second information sub-field, the second information sub-field indicating a target wake time of the corresponding first R-TWT;
a third information sub-field, the third information sub-field indicating a duration of the corresponding first R-TWT;
a fourth information sub-field, wherein the fourth information sub-field comprises multiple first identification bits, each of the first identification bits indicates, by a first value, that an affiliated STA of the first Non-AP MLD is a scheduling member of the corresponding first R-TWT, and indicates, by a second value, that an affiliated STA of the first Non-AP MLD is not a scheduling member of the corresponding first R-TWT.

18. The method according to claim 15, wherein the method further comprises at least one of following:
if the first AP does not support R-TWT scheduling, then during a service period of each first R-TWT, the second AP MLD does not communicate on a communication link that the first AP operates on; wherein, the first AP is affiliated with the second AP MLD and operates on the communication link corresponding to the first frequency band;
if the communication link that the first AP operates on has not established a second R-TWT, then during a service period of each first R-TWT, the second AP MLD does not communicate on the communication link that the first AP operates on;
if the communication link that the first AP operates on has established the second R-TWT, and among the first R-TWTs, a fourth R-TWT with a service period not overlapping with a service period of the second R-TWT exists, then during the service period of the fourth R-TWT, the second AP MLD does not communicate on the communication link that the first AP operates on;
if the communication link that the first AP operates on has established the second R-TWT, and among the first R-TWTs, a third R-TWT with a service period overlapping with the service period of the second R-TWT exists, then a second frame is sent to the first AP MLD, the second frame indicating scheduling information of the second R-TWT.

19. The method according to claim 18, wherein the second frame comprises at least one of following:
a fifth information sub-field, the fifth information sub-field indicating a broadcast target wake time identifier of the second R-TWT;
a sixth information sub-field, the sixth information sub-field indicating a target wake time of the second TWT;
a seventh information sub-field, the seventh information sub-field indicating a duration of the second R-TWT;
an eighth information sub-field, the eighth information sub-field comprising multiple second identification bits, each of the second identification bits indicating, by a first value, that an affiliated STA of the second Non-AP MLD is a scheduling member of the second R-TWT, and indicating, by a second value, that an affiliated STA of the second Non-AP MLD is not a scheduling member of the second R-TWT; the second Non-AP MLD is associated with the second AP MLD.

20. The method according to claim 18, wherein after sending the second frame, the method further comprises:
receiving a third frame sent by the first AP MLD;
wherein the third frame is used for requesting coordination of a third R-TWT, and the third R-TWT is a first R-TWT, among multiple R-TWTs, with a service period overlapping with the service period of the second R-TWT.

21. The method according to claim 20, wherein the third frame is an R-TWT coordination request frame, and the third frame further comprises a broadcast target wake time identifier of the third R-TWT.

22. The method according to claim 20, wherein if all the affiliated STAs of the first Non-AP MLD are scheduling members of the third R-TWT, or the second R-TWT has been established on all communication links that affiliated APs of the second AP MLD operate on, the third frame is used for requesting the coordination of the third R-TWT by using coordinated orthogonal frequency division multiple access or coordinated spatial multiplexing;
if at least one affiliated STA of the first Non-AP MLD is not the scheduling member of the third R-TWT, and the second R-TWT has not been established on at least one communication link that the affiliated APs of the second AP MLD operate on, the third frame is used for requesting link migration of the third R-TWT.

23. The method according to claim 22, wherein the third frame comprises an R-TWT coordination type information field, the R-TWT coordination type information field requests to coordinate the third R-TWT by using coordinated orthogonal frequency division multiple access by a third value, requests to coordinate the third R-TWT by using coordinated spatial multiplexing by a fourth value, and requests to perform the link migration for the third R-TWT by a fifth value.

24. The method according to claim 22, wherein if the third frame is used for requesting the coordination of the third R-TWT by using coordinated orthogonal frequency division multiple access or coordinated spatial multiplexing, the third frame further comprises a corresponding coordination parameter of a coordination mode; and
if the third frame is used for requesting the link migration of the third R-TWT, the third frame further comprises a first link identifier, the first link identifier indicates a first communication link that the third R-TWT is applied to after the link migration is performed for the third R-TWT.

25. The method according to claim 22, wherein the method further comprises:
sending a fourth frame to the first AP MLD, the fourth frame indicating acceptance or rejection of the coordination of the third R-TWT.

26. The method according to claim 25, wherein when the fourth frame indicates the acceptance of the coordination of the third R-TWT by using the coordinated orthogonal frequency division multiple access or the coordinated spatial multiplexing, the third R-TWT is coordinated based on a corresponding coordination parameter of a coordination mode.

27. The method according to claim 25, wherein when the fourth frame indicates acceptance of the link migration of the third R-TWT, the second R-TWT is migrated to the second communication link;
wherein, the second communication link is different from the first communication link, and the first communication link is a communication link that the third R-TWT applied to after the link migration is performed, by the first AP MLD, for the third R-TWT.

28. The method according to claim 27, wherein the fourth frame further comprises a second link identifier of the second communication link.

29. An AP MLD, wherein the AP MLD comprises:
a processing module, configured to determine a first frame, the first frame indicating scheduling information of each first restricted target wake time R-TWT joined by a first station device STA;
wherein, the first STA is affiliated with a first non-AP MLD supporting multi-link and operates on a communication link corresponding to a first frequency band; the first Non-AP MLD is associated with the first AP MLD; the first STA is located in an overlapping basic service set OBSS formed, in the first frequency band, by the first AP MLD and the second AP MLD;
a transceiver module, configured to send the first frame to the second AP MLD.

30. An AP MLD, wherein the AP MLD comprises:
a transceiver module, configured to receive a first frame sent by a first AP MLD, the first frame indicating the scheduling information of each first R-TWT joined by a first STA;
wherein, the first STA is affiliated with a first Non-AP MLD and operates on a communication link corresponding to a first frequency band; the first Non-AP MLD is associated with the first AP MLD; the first STA is located in an OBSS formed by the first AP MLD and a second AP MLD on the first frequency band.

31. An AP MLD, wherein the AP MLD comprises:
one or more processors;
wherein the AP MLD is configured to perform the communication method as claimed in any one of claims 1 to 14 or claims 15 to 28.

32. A storage medium, the storage medium storing instructions, wherein when the instructions running on a communication device, the communication device is enabled to perform the communication method as claimed in any one of claims 1 to 14 or claims 15 to 28.
